# EUROPEAN PATENT SPECIFICATION

(11) **EP 0 952 321 B1**
(45) Date of publication and mention of the grant of the patent: **25.08.2004**
(21) Application number: 99107292.7
(22) Date of filing: 14.04.1999
(51) Int. Cl.: F02D 41/14, F02D 41/30, F02D 41/40, F02D 21/08

(54) **Internal combustion engine**
Brennkraftmaschine
Moteur à combustion interne

(30) Priority: 15.04.1998 JP 10501798; 03.09.1998 JP 24964198; 22.05.1998 JP 14165698; 30.10.1998 JP 31088198
(43) Date of publication of application: 27.10.1999
(73) Proprietor: TOYOTA JIDOSHA KABUSHIKI KAISHA, Aichi-ken 471-8571 (JP)
(72) Inventor: Hayashi, Kotaro, Toyota-shi, Aichi-ken 471-8571 (JP); Sasaki, Shizuo, Toyota-shi, Aichi-ken 471-8571 (JP); Ito, Takekazu, Toyota-shi, Aichi-ken 471-8571 (JP); Murata, Hiroki, Toyota-shi, Aichi-ken 471-8571 (JP); Gotoh, Masato, Toyota-shi, Aichi-ken 471-8571 (JP); Yoshizaki, Kouji, Toyota-shi, Aichi-ken 471-8571 (JP); Iwasaki, Eiji, Toyota-shi, Aichi-ken 471-8571 (JP); Tanaka, Toshiaki, Toyota-shi, Aichi-ken 471-8571 (JP); Hirota, Shinya, Toyota-shi, Aichi-ken 471-8571 (JP); Ohashi, Nobumoto, Toyota-shi, Aichi-ken 471-8571 (JP); Ito, Kazuhiro, Toyota-shi, Aichi-ken 471-8571 (JP)
(74) Representative: Leson, Thomas Johannes Alois, Dipl.-Ing.

(56) References cited:
- EP-A- 0 560 991
- EP-A- 0 740 056
- EP-A- 0 803 645
- DE-A- 4 333 424
- PATENT ABSTRACTS OF JAPAN vol. 1997, no. 06, 30 June 1997 (1997-06-30) & JP 09 032619 A (MITSUBISHI MOTORS CORP), 4 February 1997 (1997-02-04)

## Description

### BACKGROUND OF THE INVENTION

### 1. Field of the invention

The present invention relates to an internal combustion engine according to the preamble of claim 1, which has a combustion chamber into which inactive gas is introduced so as to cause combustion.

### 2. Description of the Related Art

Conventionally, in an internal combustion engine such as a diesel engine, an engine exhaust passage and an engine intake passage are connected with each other by an exhaust gas recirculation (hereinafter referred to as EGR) passage. Exhaust gas, namely, EGR gas is recirculated into the engine intake passage via the EGR passage. In this case, the EGR gas has a relatively high specific heat and is able to absorb a large amount of heat. Hence, as the amount of EGR gas is increased, that is, as the EGR rate (the amount of EGR gas / the amount of EGR gas + the amount of intake air) is increased, the combustion temperature in a combustion chamber decreases. If the combustion temperature decreases, the generation amount of NOx is reduced. Thus, the larger the EGR rate becomes, the smaller the generation amount of NOx becomes.

As described hitherto, it has been conventionally known that the generation amount of NOx is reduced by increasing the EGR rate. However, in the process of increasing the EGR rate, when the EGR rate exceeds a certain threshold value, the generation amount of soot, namely, smoke starts increasing abruptly. In this respect, it is conventionally considered that if the EGR rate is increased beyond a certain threshold value, the amount of smoke increases endlessly. In other words, the EGR rate at which the amount of smoke starts increasing abruptly is considered to be a maximum allowable value of the EGR rate.

Accordingly, the EGR rate is set below the maximum allowable value. Although the maximum allowable value of the EGR rate differs greatly depending on a type of the engine or fuel, it is approximately 30 to 50%. Therefore, in the diesel engine, the EGR rate is at most set to 30 to 50%.

As described above, it is conventionally considered that the EGR rate has a maximum allowable value. Thus, the EGR rate is set so as to reduce a generation amount of NOx to the maximum possible extent, on condition that the EGR rate does not exceed the maximum allowable value. However, even if the EGR rate has been thus determined, the generation amount of NOx cannot be reduced limitlessly. In fact, the generation of a comparative amount of NOx is inevitable.

In view of this, a new type of diesel engine has been disclosed (WO93/07363). According to this diesel engine, in order to clean NOx contained in exhaust gas, an NOx absorber is disposed in the engine exhaust passage. The NOx absorber absorbs NOx when the air-fuel ratio of inflow exhaust gas is lean, and discharges the NOx it has absorbed when the air-fuel ratio of inflow exhaust gas is equal to a stoichiometric air-fuel ratio or rich. When NOx should be discharged from the NOx absorber, the air-fuel ratio in the combustion chamber is made rich. Alternatively, fuel is supplied to the engine exhaust passage upstream of the NOx absorber, so that the air-fuel ratio of exhaust gas flowing into the NOx absorber is made rich.

However, the following fact has been discovered in the course of studies on combustion in diesel engines. That is, as described above, if the EGR rate is made larger than the maximum allowable value, the generation amount of smoke increases abruptly. However, the generation amount of smoke has its peak. If the EGR rate is further increased after the generation amount of smoke has reached its peak, the generation amount of smoke then starts decreasing abruptly. If the EGR rate is set to 70% or more during an idling operation, or if the EGR rate is set to about 55% or more in the case where EGR gas is cooled intensively, NOx is hardly generated and the generation amount of smoke becomes almost zero. Namely, soot is hardly generated. Thereafter, based on this discovery, further studies have been conducted on the reason why soot is hardly generated.

It has been revealed by repeated experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of fuel and ambient gas is greatly affected by the endothermic effect of the gas surrounding fuel at the time of fuel combustion. If the endothermic value of the gas surrounding the fuel is adjusted in accordance with an exothermic value during the fuel combustion, the temperature of fuel and ambient gas can be controlled.

Accordingly, if the temperature of fuel and ambient gas in the combustion chamber during combustion is set equal to or lower than a temperature at which the growth of hydrocarbon is stopped halfway, no soot is generated. The temperature of fuel and ambient gas in the combustion chamber during combustion can be set equal to or lower than a temperature at which the growth of hydrocarbon is stopped halfway, by adjusting an endothermic value of the gas surrounding fuel. On the other hand, the hydrocarbon that has stopped growing before becoming soot can be cleaned easily by means of a posttreatment that uses an oxidizing catalyst or the like. This is the basic concept of the novel combustion system. The present applicant has already applied for a patent for an internal combustion engine employing the novel combustion system, under the application number of EP-A-879,946.

In order to reduce soot and NOx simultaneously under the new combustion system, the EGR rate needs to be at least about 55% or more. However, the EGR rate can be set to about 55% or more only when the amount of intake air is small, namely, when the engine load is relatively low. If the amount of inlet air has exceeded a certain threshold value, it cannot be increased until the EGR rate is reduced.

Accordingly, if the amount of inlet air has exceeded a certain threshold value, the EGR rate needs to be set lower than an EGR rate where the generation amount of soot reaches its peak.

However, if the EGR rate is set lower than the EGR rate where the generation amount of soot reaches its peak, the generation amount of NOx increases. Hence, even if the aforementioned new combustion system that prevents generation of soot and NOx almost completely is employed, it should be considered how to clean NOx for the case where the amount of inlet air is large.

Document EP 0 803 645 A1 describes a compression ignition type engine having an engine control injecting fuel in a combustion chamber of the engine during the compression stroke or intake stroke before 60 degrees before the top dead center of the compression stroke. The mean particle size of the fuel injected at said time is made a size in which the temperature of the particles reaches the boiling point of the main ingredient of the fuel determined by the pressure in the combustion chamber, at substantially the top dead center of the compression stroke. At least when the engine is operating under a heavy load, the EGR ratio is made more than 40% and the air excess ratio is made approximately 1.0. Accroding to this document, different combustion modes relate to different EGR ratios. By such an engine control it is intended to establish a combustion with a soot amount below a maximum by avoiding a conventional combustion having a low EGR amount.

### SUMMARY OF THE INVENTION

It is an object of the present invention to provide an internal combustion engine wherein fuel injection control is performed so as to optimize an air-fuel ratio of exhaust gas flowing into a pollutant absorber.

The above-described object is achieved by combination of features stated in the main claim. The dependent claims disclose further advantageous implementations of the present invention.

In order to achieve the aforementioned object, according to the present invention, there is provided an internal combustion engine constructed as follows. That is, according to the internal combustion engine of the present invention, in response to an increase of inactive gas in a combustion chamber, a generation amount of soot gradually increases and reaches its peak, and in response to a further increase of inactive gas in the combustion chamber, a temperature of fuel and ambient gas in the combustion chamber during combustion becomes lower than a temperature at which soot is produced, so that soot is hardly generated. The internal combustion engine is provided with a switching means for selectively switching between a first combustion mode and a second combustion mode. During the first combustion mode, the combustion chamber contains inactive gas of an amount larger than an amount where a generation amount of soot reaches its peak, so that soot is hardly generated. During the second combustion mode, the combustion chamber contains inactive gas of an amount smaller than an amount where a generation amount of soot reaches its peak. Additional fuel is injected from a fuel injection valve in the latter half of an expansion stroke or during an exhaust stroke, so that an air-fuel ratio of exhaust gas flowing into a pollutant absorber, preferably a NOx absorber, is set to a stoichiometric air-fuel ratio or made rich such that pollutants, preferably NOx, are discharged from an NOx absorber during the second combustion mode. Thus, fuel injection control can be performed such that the air-fuel ratio of the exhaust gas flowing into the NOx absorber is optimized.

### BRIEF DESCRIPTION OF THE DRAWINGS

The foregoing and further objects, features and advantages of the present invention will become apparent from the following description of preferred embodiments with reference to the accompanying drawings, wherein:
Fig. 1 is a general view of a compression ignition type internal combustion engine according to a first embodiment of the present invention;
Fig. 2 is a cross-sectional view of a side of a combustion chamber;
Fig. 3 shows a bottom face of a cylinder head;
Fig. 4 is a cross-sectional view of the side of the combustion chamber;
Fig. 5 shows lift amounts of intake and exhaust valves and fuel injection;
Fig. 6 shows graphs indicating the change of the throttle opening degree, the EGR rate, the generation amount of smoke, HC, CO and NOx, depending on the air fuel ratio, respectively;
Figs. 7A and 7B show the combustion pressure, depending on the air fuel ratio;
Fig. 8 shows molecules of fuel;
Fig. 9 shows a relationship between generation amount of smoke and an EGR rate;
Fig. 10 shows a relationship between a total intake gas amount and a required load;
Fig. 11 shows a first operational area I and a second operational area II;
Fig. 12 shows an output of an air-fuel ratio sensor;
Fig. 13 shows an opening degree of a throttle valve and the like;
Fig. 14 shows an air-fuel ratio in the operational area I;
Figs. 15A and 15B show a map of a target opening degree of the throttle valve or the like;
Fig. 16 shows an air-fuel ratio during a second combustion mode;
Figs. 17A and 17B are explanatory views of operations of absorbing and discharging NOx;
Figs. 18A and 18B show maps of an amount of NOx that is absorbed per unit time;
Fig. 19 is a flowchart for processing an NOx discharge flag;
Fig. 20 is a flowchart for controlling operation of the engine;
Fig. 21 is a general view of a compression ignition type internal combustion engine according to the present invention;
Fig. 22 is a cross-sectional view of a side of a combustion chamber of the compression ignition type internal combustion engine;
Fig. 23 is a plan view of a top face of a piston;
Fig. 24 is a cross-sectional view of the side of the combustion chamber shown in Fig. 22;
Fig. 25 shows lift amounts of intake and exhaust valves and fuel injection;
Fig. 26 is a general view of a compression ignition type internal combustion engine according to a second embodiment of the present invention;
Fig. 27 is a cross-sectional view of a brake booster;
Figs. 28A and 28B show a relationship among torque requirement, load requirement and engine speed;
Figs. 29A and 29B show maps of fuel injection amount and the like;
Figs. 30A and 30B show maps of a target opening degree of the throttle valve and the like;
Fig. 31 shows a target threshold value in a first chamber of the brake booster;
Fig. 32 is a flowchart for processing an injection stop flag; and
Figs. 33 and 34 are flowcharts for controlling operation of the engine.

### DESCRIPTION OF THE PREFERRED EMBODIMENTS

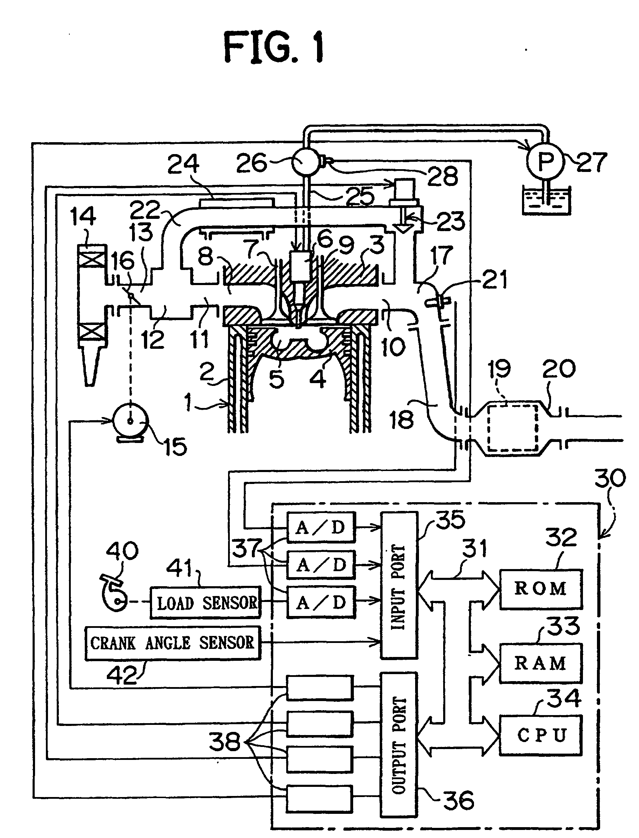

Figs. 1 through 3 show a first embodiment of the present invention wherein the present invention is applied to a four-stroke compression ignition type internal combustion engine.

An engine body 1 is composed of a cylinder block 2, a cylinder head 3, a piston 4, a cavity 5a formed in a top face of the piston 4, a combustion chamber 5 formed in the cavity 5a, an electrically controlled fuel injection valve 6, a pair of intake valves 7, an intake port 8, a pair of exhaust valves 9 and an exhaust port 10. The intake port 8 communicates with a surge tank 12 via a corresponding intake branch pipe 11, and the surge tank 12 communicates with an air cleaner 14 via an intake duct 13. Disposed in the intake duct 13 is a throttle valve 16, which is driven by an electric motor 15. On the other hand, the exhaust port 10 is connected with a casing 20 containing a pollutant absorber (19), preferably a NOx absorber, via an exhaust manifold 17 and an exhaust pipe 18.

As shown in Fig. 1, an air-fuel ratio sensor 21 is disposed in the exhaust manifold 17. The exhaust manifold 17 and the surge tank 12 are connected with each other via an EGR passage 22, in which an electrically controlled EGR control valve 23 is disposed. Further, disposed around the EGR passage 22 is a cooling device 24 for cooling EGR gas flowing through the EGR passage 22. In the embodiment shown in Fig. 1, engine coolant is introduced into the cooling device 24, and the EGR gas is cooled by the engine coolant.

On the other hand, each fuel injection valve 6 is connected with a fuel reservoir, i.e., a so-called common rail 26 via a fuel feed pipe 25. Fuel is supplied to the common rail 26 from an electrically controlled fuel pump 27, whose discharge amount is variable. The fuel supplied to the common rail 26 is supplied to the fuel injection valve 6 via each fuel feed pipe 25. Installed in the common rail 26 is a fuel pressure sensor 28 for detecting a fuel pressure in the common rail 26. Based on an output signal from the fuel pressure sensor 28, the discharge amount of the fuel pump 27 is controlled such that the fuel pressure in the common rail 26 becomes a target fuel pressure.

An electronic control unit (ECU) 30 is composed of a digital computer and provided with a ROM (read only memory) 32, a RAM (random access memory) 33, a CPU (microprocessor) 34, an input port 35 and an output port 36, which are interconnected with one another by a bi-directional bus 31. The output signal from the air-fuel ratio sensor 21 is inputted to the input port 35 via a corresponding AD converter 37. The output signal from the fuel pressure sensor 28 is also inputted to the input port 35 via a corresponding AD converter 37. Connected to an accelerator pedal 40 is a load sensor 41 that generates an output voltage proportional to a depression amount L of the accelerator pedal 40. The output voltage of the load sensor 41 is inputted to the input port 35 via the corresponding AD converter 37. Further, connected to the input port 35 is a crank angle sensor 42, which generates an output pulse every time a crank shaft rotates, for example, by 30°. On the other hand, the output port 36 is connected to the fuel injection valve 6, the electric motor 15, the EGR control valve 23 and the fuel pump 27 via a corresponding driving circuit 38.

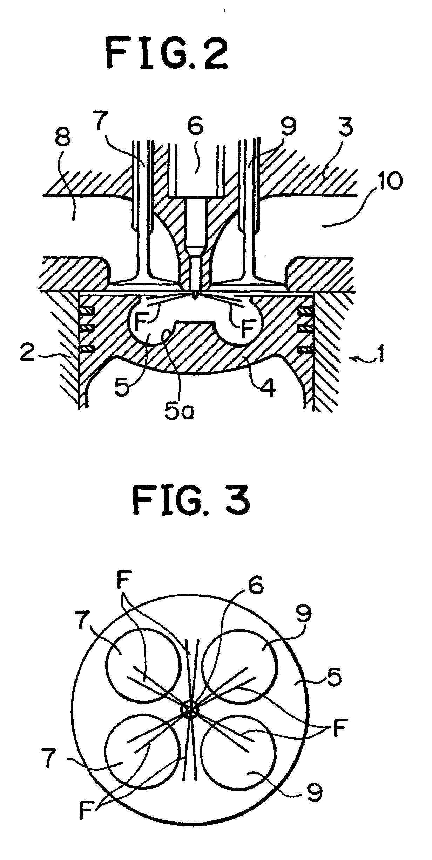

As shown in Figs. 2 and 3, in this embodiment, the fuel injection valve 6 is composed of a hole nozzle having six nozzle holes. Fuel F is injected from the nozzle holes of the fuel injection valve 6 slightly downwards with respect to the horizontal plane at equal angular intervals. As shown in Fig. 3, two out of six fuel sprays F splash along a lower face of a valve body of each exhaust valve 9. Figs. 2 and 3 show fuel injection that is carried out at the last stage of a compression stroke. At this time, the fuel sprays F proceed toward an inner peripheral face of the cavity 5a and then get ignited and burn.

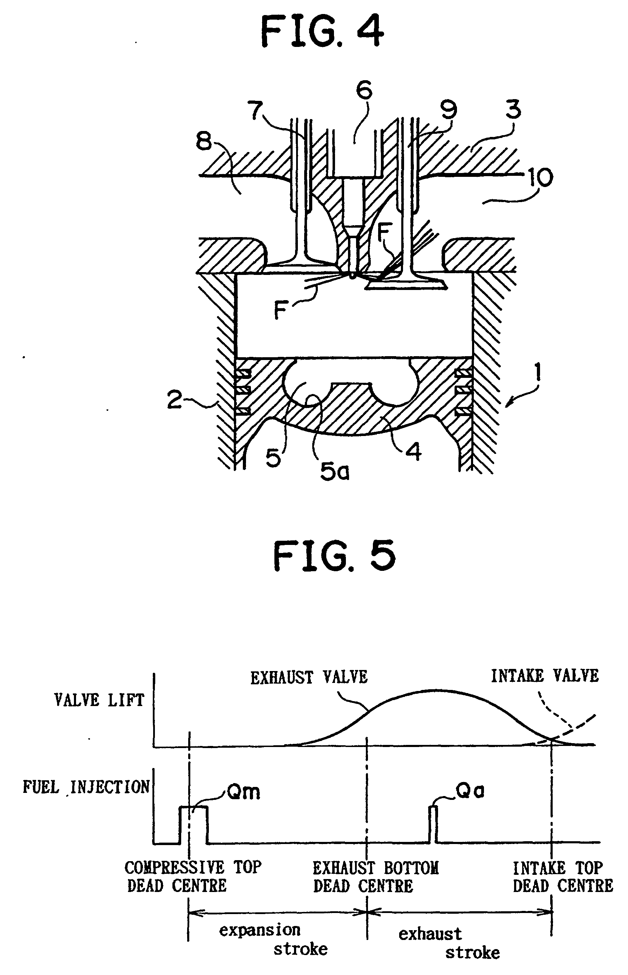

Fig. 4 shows a case where additional fuel is injected from the fuel injection valve 6 when the exhaust valve 9 assumes its maximum lift amount during an exhaust stroke. That is, as shown in Fig. 5, main injection Qm is carried out in the vicinity of a compression top dead centre, and additional fuel Qa is injected in the middle of the exhaust stroke. In this case, the fuel spray F proceeding toward the valve body of the exhaust valve 9 flies toward a space between a back face of a shade portion of the exhaust valve 9 and the exhaust port 10. In other words, two out of the six nozzle holes of the fuel injection valve 6 are formed such that if additional fuel Qa is injected when the exhaust valve 9 is open, the fuel spray F flies toward the space between the back face of the shade portion of the exhaust valve 9 and the exhaust port 10. At this time, in the embodiment shown in Fig. 4, the fuel spray F hits the back face of the shade portion of the exhaust valve 9. The fuel spray F that has hit the back face of the shade portion of the exhaust valve 9 rebounds therefrom and flies into the exhaust port 10.

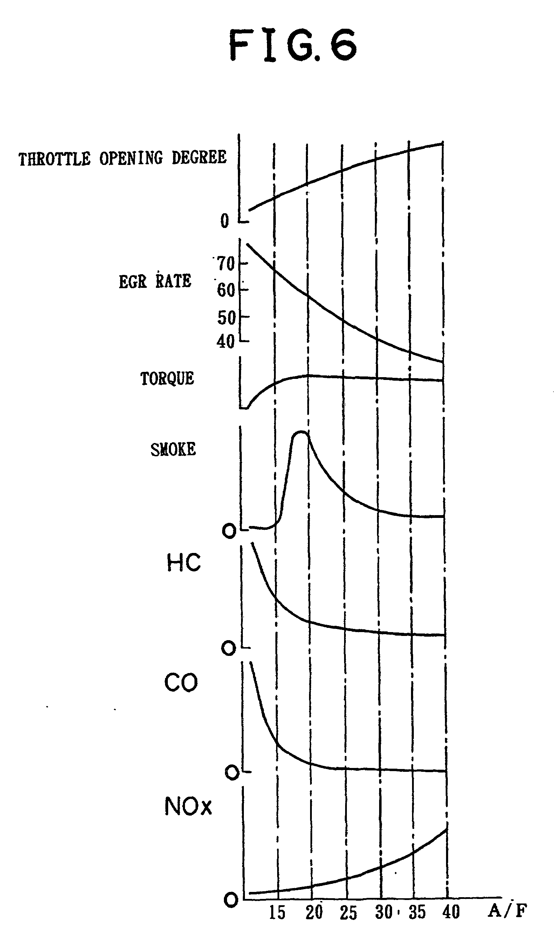

Normally, additional fuel Qa is not injected and only main injection Qm is carried out. Fig. 6 shows an experimental example indicating changes in output torque and changes in discharge amount of smoke, HC (hydrocarbon), CO and NOx when the air-fuel ratio A/F (indicated by an axis of abscissa in Fig. 6) is changed by changing an opening degree of the throttle valve 16 and an EGR rate during a low-load operation of the engine. As can be seen from Fig. 6, in this experimental example, the smaller the air-fuel ratio A/F becomes, the larger the EGR rate becomes. When the air-fuel ratio A/F is equal to or smaller than a stoichiometric air-fuel ratio (about 14.6), the EGR rate is equal to or larger than 65%.

As shown in Fig. 6, if the air-fuel ratio A/F is made smaller by increasing the EGR rate, the generation amount of smoke starts increasing when the EGR rate reaches about 40% and the air-fuel ratio A/F reaches about 30. Then, if the air-fuel ratio A/F is made smaller by further increasing the EGR rate, the generation amount of smoke increases abruptly and reaches its peak. Then, if the air-fuel ratio A/F is made smaller by further increasing the EGR rate, the generation amount of smoke drops abruptly. When the EGR rate is equal to or larger than 65% and the air-fuel ratio A/F approaches 15, the generation amount of smoke almost becomes zero. That is, soot is hardly generated. In this state, the output torque of the engine drops slightly, and the generation amount of NOx becomes comparatively low. On the other hand, the generation amounts of HC and CO start increasing.

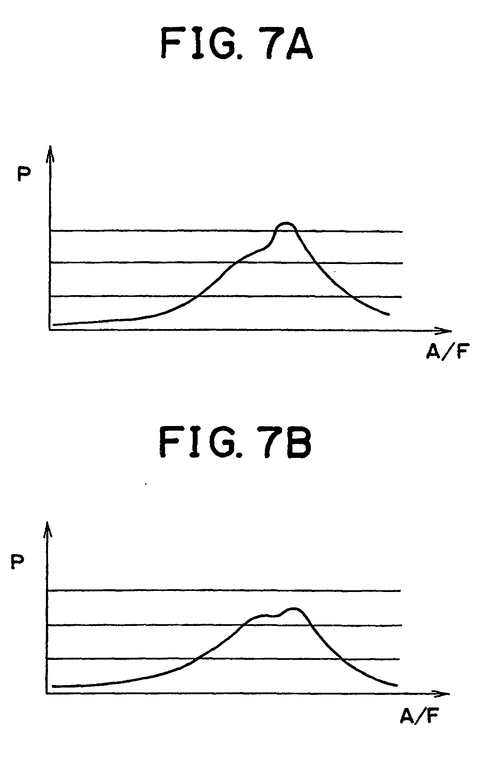

Fig. 7A shows changes in fuel pressure in the combustion chamber 5 when the air-fuel ratio A/F is in the vicinity of 21 and the generation amount of smoke assumes a maximum value. Fig. 7B shows changes in fuel pressure in the combustion chamber 5 when the air-fuel ratio A/F is in the vicinity of 18 and the generation amount of smoke is almost zero. As is apparent from the comparison of Fig. 7A with Fig. 7B, the fuel pressure is lower in the case where the generation amount of smoke is almost zero as shown in Fig. 7B than in the case where the generation amount of smoke is large as shown in Fig. 7A.

The following can be concluded from the experimental results shown in Figs. 6, 7A and 7B. That is, first of all, when the air-fuel ratio A/F is equal to or smaller than 15 and the generation amount of smoke is almost zero, the generation amount of NOx drops drastically, as can be seen from Fig. 6. The fact that the generation amount of NOx has dropped means that the combustion temperature in the combustion chamber 5 has dropped. Accordingly, when soot is hardly generated, it can be concluded that the combustion temperature in the combustion chamber 5 is low. The same conclusion can also be drawn from Figs. 7A and 7B. That is, the combustion pressure is low in a state shown in Fig. 7B where soot is hardly generated. Therefore, in this state, it can be concluded that the combustion temperature in the combustion chamber 5 is low.

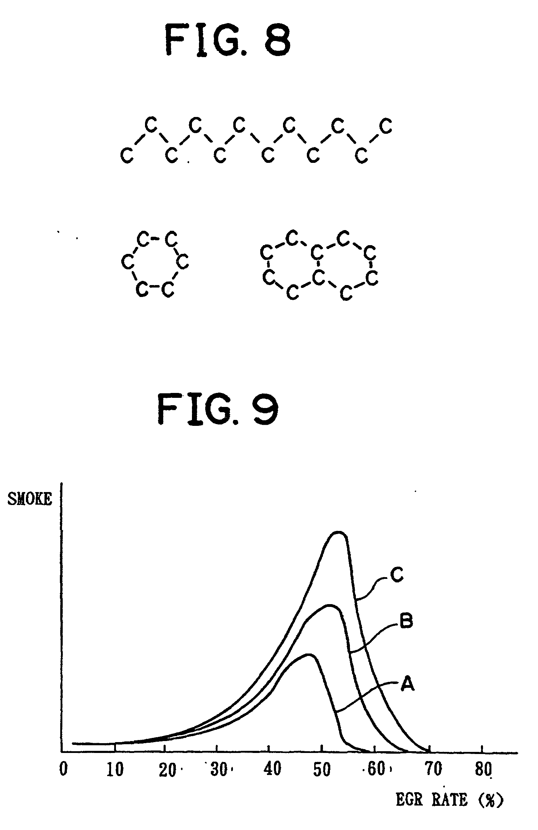

Secondly, as shown in Fig. 6, when the generation amount of smoke, namely, the generation amount of soot becomes almost zero, the discharge amounts of HC and CO increase. This means that hydrocarbon is discharged before growing up to become soot. In other words, the linear hydrocarbon or aromatic hydrocarbon contained in fuel as shown in Fig. 8 is thermally decomposed when heated in a state of oxygen deficiency, and a precursor of soot is formed. Then, soot that is composed of a solid body of assembled carbon atoms is produced. In this case, the actual process in which soot is produced is complicated, and it is unclear what state the precursor of soot assumes. In any case, the hydrocarbon as shown in Fig. 8 grows up to become soot through the precursor of soot. Accordingly, as described above, when the generation amount of soot becomes almost zero, the discharge amounts of HC and CO increase as shown in Fig. 6. At this time, HC is either the precursor of soot or hydrocarbon in a state prior to the precursor of soot.

The above-described studies based on the experimental results shown in Figs. 6, 7A and 7B are summarised as follows. That is, when the combustion temperature in the combustion chamber 5 is low, the generation amount of soot is almost zero. At this time, the precursor of soot or hydrocarbon in a state prior to the precursor of soot is discharged from the combustion chamber 5. As a result of more elaborate experiments and studies on this subject, it has been revealed that the growing process of soot is stopped halfway, that is, no soot is generated in the case where the temperature of fuel and ambient gas in the combustion chamber 5 is equal to or lower than a certain temperature. When the temperature of fuel and ambient gas in the combustion chamber 5 becomes equal to or higher than the certain temperature, soot is generated.

The temperature of fuel and ambient gas when the process of producing hydrocarbon is stopped in a state prior to the precursor of soot, namely, the aforementioned certain temperature changes depending on various factors such as the type of fuel, air-fuel ratio, compression ratio and the like. Accordingly, it is impossible to mention a concrete value of the aforementioned certain temperature. However, the aforementioned certain temperature is closely related to the generation amount of NOx and thus can be limited to a certain range judging from the generation amount of NOx. In other words, the larger the EGR rate becomes, the lower the temperature of fuel and ambient gas during combustion becomes. The larger the EGR rate becomes, the smaller the generation amount of NOx becomes. In this case, when the generation amount of NOx becomes about 10ppm (g/t) or less, soot is hardly generated. Accordingly, the aforementioned certain temperature virtually coincides with a temperature at which the generation amount of NOx becomes about 10ppm (g/t) or less.

Once soot has been produced, the soot cannot be cleaned by means of a posttreatment that uses a catalyst having the function of oxidation. On the other hand, the precursor of soot or hydrocarbon in a state prior to the precursor of soot can be cleaned easily by means of a posttreatment that uses a catalyst having the function of oxidation. If such a posttreatment that uses the catalyst having the function of oxidation is taken into account, there is a great difference between the case where hydrocarbon is discharged from the combustion chamber 5 as the precursor of soot or in a state prior to the precursor of soot and the case where hydrocarbon is discharged from the combustion chamber 5 as soot. The important features of the novel combustion system employed in the present invention are that hydrocarbon is discharged from the combustion chamber 5 as the precursor of soot or in a state prior to the precursor of soot without producing soot in the combustion chamber 5 and that the hydrocarbon is oxidized by means of the catalyst having the function of oxidation.

In order to stop the growth of hydrocarbon in a state prior to the production of soot, it is necessary to keep fuel and ambient gas in the combustion chamber 5 during combustion lower than a temperature at which soot is produced. In this case, it has been revealed that the endothermic effect of ambient gas at the time of fuel combustion has an enormous effect in limiting the temperature of the fuel and ambient gas.

In other words, if there is only air around fuel, the evaporated fuel immediately reacts with oxygen in the air and burns. In this case, the temperature of the air that is away from the fuel does not rise considerably, and only the air surrounding the fuel locally reaches a very high temperature. Namely, at this time, the air that is away from the fuel is hardly subjected to the endothermic effect of the combustion heat of the fuel. In this case, since the combustion temperature locally becomes very high, the unburnt hydrocarbon that has received the combustion heat produces soot.

On the other hand, if there is fuel in the mixture of a large amount of inactive gas and a small amount of air, things are slightly different. In this case, the evaporated fuel is diffused all around, reacts with the oxygen intermingled in the inactive gas, and burns. In this case, since the inactive gas in the periphery absorbs combustion heat, the combustion temperature does not rise considerably. That is, the combustion temperature can be limited to a low temperature. Namely, the presence of inactive gas plays an important role in limiting the combustion temperature, and the endothermic effect of the inactive gas makes it possible to limit the combustion temperature to a low temperature.

In this case, in order to keep fuel and ambient gas lower than a temperature at which soot is produced, a sufficient amount of inactive gas that can absorb heat of an amount sufficient to achieve such a purpose is required. Accordingly, if the amount of fuel increases, the required amount of inactive gas increases correspondingly. In this case, the larger the specific heat of inactive gas becomes, the larger the endothermic effect thereof becomes. Hence, it is preferable that the specific heat of the inactive gas be large. From this standpoint, since CO₂ or EGR gas has a relatively large specific heat, it is preferable to use EGR gas as inactive gas.

Fig. 9 shows a relationship between EGR rate and smoke in the case where EGR gas is used as inactive gas and the cooling degree of the EGR gas is changed. That is, referring to Fig. 9, a curve A represents a case where EGR gas is maintained at about 90°C by cooling the EGR gas intensively, a curve B represents a case where EGR gas is cooled by a compact cooling system, and a curve C represents a case where EGR gas is not cooled forcibly.

As indicated by the curve A in Fig. 9, in the case where EGR gas is cooled intensively, the generation amount of soot reaches its peak when the EGR rate is slightly lower than 50%. In this case, if the EGR rate is set to about 55% or more, soot is hardly generated. Further, as indicated by the curve C in Fig. 9, in the case where EGR gas is not cooled forcibly, the generation amount of soot reaches its peak when the EGR rate is in the vicinity of 55%. In this case, if the EGR rate is set to about 70% or more, soot is hardly generated.

Fig. 9 shows a generation amount of smoke when the engine load is relatively high. If the engine load decreases, the EGR rate at which the generation amount of soot reaches its peak drops slightly, and the lower limit of the EGR rate at which soot is hardly generated also drops slightly. Thus, the lower limit of the EGR rate at which soot is hardly generated changes depending on the cooling degree of EGR gas or the engine load.

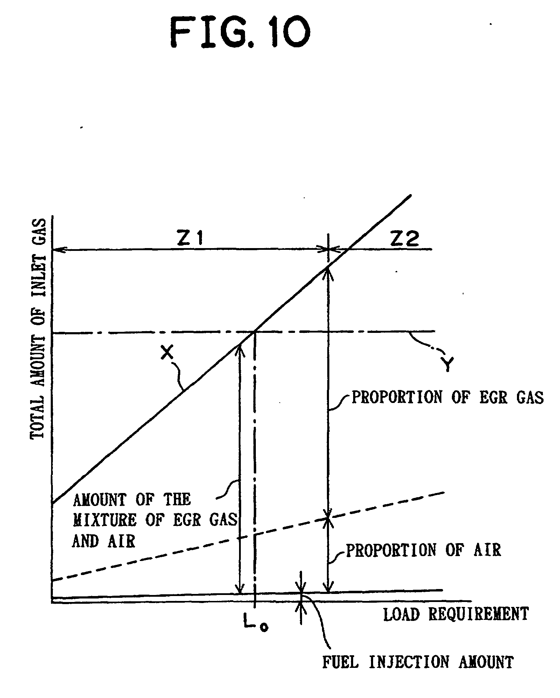

Fig. 10 shows an amount of the mixture of EGR gas and air and a proportion of air to EGR gas in the mixture that are necessary to keep fuel and ambient gas during combustion lower than a temperature at which soot is generated, in the case where EGR gas is used as inactive gas. In Fig. 10, the axis of ordinate represents a total amount of inlet gas admitted into the combustion chamber 5, and an alternate long and short dash line Y represents a total amount of inlet gas that can be admitted into the combustion chamber 5 when the supercharging operation is not performed. Further, the axis of abscissa represents a load requirement, and Z1 represents an area of low-load operation.

Referring to Fig. 10, the proportion of air, namely, the amount of air in the mixture represents an amount of air that is necessary for complete combustion of injected fuel. That is, in the case shown in Fig. 10, the ratio of the amount of air to the amount of injected fuel is equal to the stoichiometric air-fuel ratio. On the other hand, in Fig. 10, the proportion of EGR gas, namely, the amount of EGR gas in the mixture represents a minimum amount of EGR gas that is necessary to keep fuel and ambient gas lower than a temperature at which soot is formed. The aforementioned amount of EGR gas corresponds to an EGR rate of about 55% or more. In the embodiment shown in Fig. 10, the EGR rate is equal to or larger than 70%. Namely, in the case where the total amount of inlet gas admitted into the combustion chamber 5 is represented by a solid line X in Fig. 10 and the ratio of the amount of air to the amount of EGR gas is set as shown in Fig. 10, the temperature of fuel and ambient gas becomes lower than a temperature at which soot is produced, and no soot is generated. At this time, the generation amount of NOx is about 10ppm (g/t) or less. Accordingly, the generation amount of NOx is very small.

If the amount of fuel injection increases, the exothermic value at the time of fuel combustion increases. Hence, in order to keep fuel and ambient gas lower than a temperature at which soot is generated, it is necessary to increase an amount of heat to be absorbed by EGR gas. Therefore, as shown in Fig. 10, the amount of EGR gas needs to be increased as the amount of fuel injection increases. In other words, it is necessary to increase an amount of EGR gas as the load requirement becomes higher.

On the other hand, in a load area Z2 in Fig. 10, the total amount X of inlet gas that is necessary to prevent generation of soot exceeds the total amount of inlet gas that can be admitted. Accordingly, in this case, in order to supply the combustion chamber 5 with a total amount of inlet gas that is necessary to prevent generation of soot, it is necessary to supercharge or pressurise both EGR gas and inlet air or only EGR gas. In the case where EGR gas or the like is not supercharged or pressurised, in the load area Z2, the total amount X of inlet gas coincides with the total amount Y of inlet gas that can be admitted. Therefore, in this case, with a view to preventing generation of soot, the amount of air is slightly reduced to increase an amount of EGR gas, and fuel combustion is promoted under a rich air-fuel ratio.

As described previously, Fig. 10 shows a case where fuel burns under the stoichiometric air-fuel ratio. However, in the area Z1 of low-load operation shown in Fig. 10, even if the amount of air is made smaller than that shown in Fig. 10, that is, the air-fuel ratio is made rich, it is possible to limit the generation amount of NOx to about 10ppm (g/t) or less while preventing generation of soot. Further, in the area Z 1 of low-load operation, even if the amount of air is made larger than that shown in Fig. 10, that is, the average of the air-fuel ratio is set to a lean value of 17 to 18, it is possible to limit the generation amount of NOx to about 10ppm (g/t) or less while preventing generation of soot.

In other words, when the air-fuel ratio is made rich, the amount of fuel becomes excessive. However, since the combustion temperature is set low, a surplus of fuel does not grow up to become soot. Thus, no soot is generated. Further, at this time, the generation amount of NOx is very small. On the other hand, even when the average air-fuel ratio is lean or the air-fuel ratio is equal to the stoichiometric air-fuel ratio, if the combustion temperature becomes high, a small amount of soot is produced. However, according to the present invention, since the combustion temperature is set low, no soot is produced. Furthermore, the generation amount of NOx is also very small.

Thus, in the area Z1 of low-load operation of the engine, no soot is generated and the generation amount of NOx is very small regardless of the air-fuel ratio, that is, regardless of whether the air-fuel ratio is rich, equal to the stoichiometric air-fuel ratio, or lean on average. Accordingly, from the standpoint of an enhancement in fuel consumption, it is preferable at this time to set the average air-fuel ratio lean.

Fuel and ambient gas in the combustion chamber during combustion can be kept equal to or lower than a temperature at which the growth of hydrocarbon is stopped halfway, only when the engine load is relatively low, that is, when the exothermic value of combustion is small. Therefore, according to the embodiment of the present invention, when the engine load is relatively low, fuel and ambient gas during combustion is kept lower than a temperature at which the growth of hydrocarbon is stopped halfway, and a first combustion mode, namely, low-temperature combustion is performed. When the engine load is relatively high, a second combustion mode, namely, a conventionally adopted combustion is performed. As is apparent from the foregoing description, when the first combustion mode, namely, the low-temperature combustion is performed, the amount of inactive gas in the combustion chamber is larger than the amount of inactive gas where the generation amount of soot reaches its peak, so that soot is hardly generated. When the second combustion mode, namely, the conventionally adopted combustion is performed, the amount of inactive gas in the combustion chamber is smaller than the amount of inactive gas where the generation amount of soot reaches its peak.

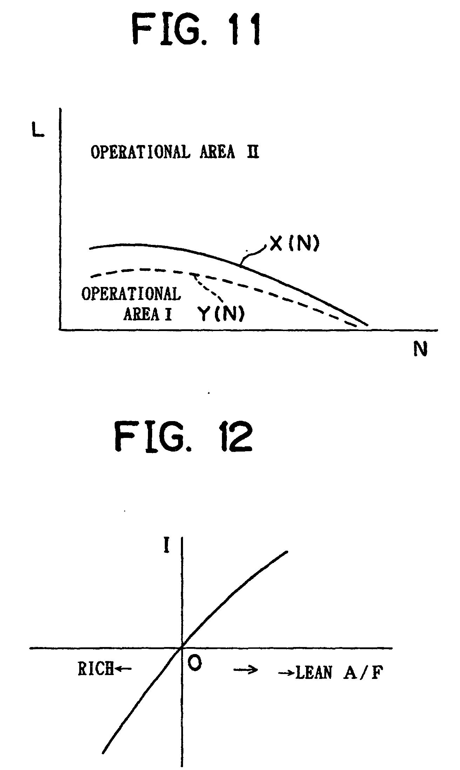

Fig. 11 shows an operational area I as a first operational area where the first combustion mode, namely, the low-temperature combustion is performed and an operational area II as a second operational area where the second combustion mode, namely, the conventionally adopted combustion is performed. In Fig. 11, the axis of ordinate represents depression amount of the accelerator pedal 40, namely, a load requirement L, and the axis of abscissa represents engine speed N. Further, X(N) represents a first border between the operational area I and the operational area II, and Y(N) represents a second border between the operational area I and the operational area II. Based on the first border X(N), it is determined whether or not a transition from the operational area I to the operational area II has been made. Based on the second border Y(N), it is determined whether or not a transition from the operational area II to the operational area I has been made.

That is, when the operational state of the engine is in the operational area I and low-temperature combustion is performed, if the load requirement L exceeds the first border X(N) that is a function of the engine speed N, it is determined that a transition to the operational area II has been made. Therefore, the conventionally adopted combustion is performed. Then, if the load requirement L becomes lower than the second border Y(N), it is determined that a transition to the operational area I has been made. Therefore, the low-temperature combustion is performed again.

The first reason why the first border X(N) and the second border Y(N) have been thus provided is that the combustion temperature is relatively high on the high-load side in the operational area II and that the low-temperature combustion cannot be performed immediately even if the load requirement L has become lower than the first border X(N). In other words, unless the load requirement L has become comparatively low and dropped below the second border Y(N), the low-temperature combustion cannot be started immediately. The second reason is that a hysteresis is to be set to prevent fluctuations between the operational area I and the operational area II.

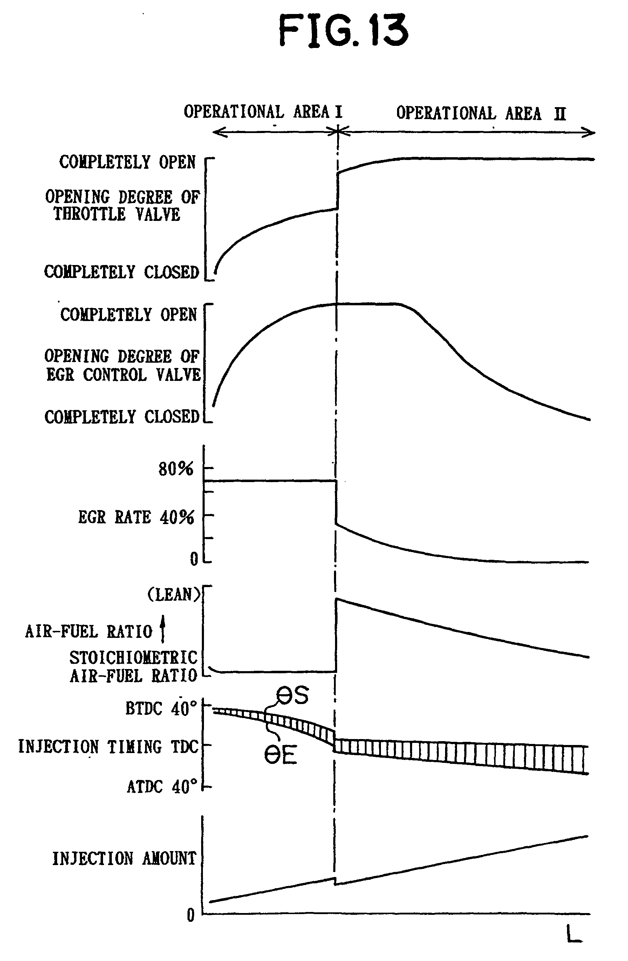

Fig. 12 shows an output of the air-fuel ratio sensor 21. As shown in Fig. 12, the output current I of the air-fuel ratio sensor 21 changes depending on the air-fuel ratio A/F. Accordingly, the air-fuel ratio can be detected from an output current I of the air-fuel ratio sensor 21.

The outline of the operational control performed in the operational area I and the operational area II will now be explained with reference to Fig. 13.

Fig. 13 shows changes in opening degree of the throttle valve 16, opening degree of the EGR control valve 23, EGR rate, air-fuel ratio, injection timing and injection amount in accordance with changes in load requirement L. As shown in Fig. 13, in the operational area I where the load requirement L is low, as the load requirement L becomes higher, the opening degree of the throttle valve 16 gradually increases approximately from a completely closed state to a half-open state. Further, as the load requirement L becomes higher, the opening degree of the EGR control valve 23 gradually increases approximately from a completely closed state to a half-open state. Further, according to an example shown in Fig. 13, the EGR rate is about 70% in the operational area I, and the air-fuel ratio is slightly lean.

In other words, the opening degrees of the throttle valve 16 and the EGR control valve 23 are controlled such that the EGR rate is about 70% and the air-fuel ratio is slightly lean in the operational area I. At this time, the air-fuel ratio is controlled to a target lean air-fuel ratio by correcting an opening degree of the EGR control valve 23 based on an output signal from the air-fuel ratio sensor 21. Further, in the operational area I, fuel injection is carried out before the compression top dead centre TDC. In this case, an injection start timing θS is retarded as the load requirement L becomes higher. Besides, an injection end timing θE is also retarded as the injection start timing θS is retarded.

During idling operation, the throttle valve 16 is closed until it is closed almost completely, and the EGR control valve 23 is closed until it is closed almost completely. If the throttle valve 16 is closed until it is closed almost completely, the pressure in the combustion chamber 5 at the beginning of compression becomes low. Hence, the compressive pressure becomes small. If the compressive pressure becomes small, the compressive work by means of the piston 4 becomes small, so that the vibration of the engine body 1 is reduced. In other words, during idling operation, in order to curb vibration of the engine body 1, the throttle valve 16 is closed until it is closed almost completely.

On the other hand, if the engine undergoes a transition from the operational area I to the operational area II, the opening degree of the throttle valve 16 increases stepwise from a half-open state toward a completely open state. At this time, according to the example shown in Fig. 13, the EGR rate decreases stepwise from about 70% to 40% or less, and the air-fuel ratio increases stepwise. That is, since the EGR rate goes beyond a range (Fig. 9) where a large amount of smoke is generated, there is no possibility of a large amount of smoke being generated when the engine undergoes a transition from the operational area I to the operational area II.

In the operational area II, the conventionally adopted combustion is performed. During the conventionally adopted combustion, although a small amount of soot and NOx are generated, the thermal efficiency is higher in comparison with the low-temperature combustion. Accordingly, if the engine undergoes a transition from the operational area I to the operational area II, the injection amount is reduced stepwise.

In the operational area II, apart from a few exceptional cases, the throttle valve 16 is held in a completely open state, and the opening degree of the EGR control valve 23 is gradually reduced as the load requirement L becomes higher. In the operational area II, the EGR rate becomes lower as the load requirement L becomes higher, and the air-fuel ratio becomes smaller as the load requirement L becomes higher. However, the air-fuel ratio remains lean even if the load requirement L has become high. Further, the injection start timing θS is in the vicinity of the compressive top dead centre TDC.

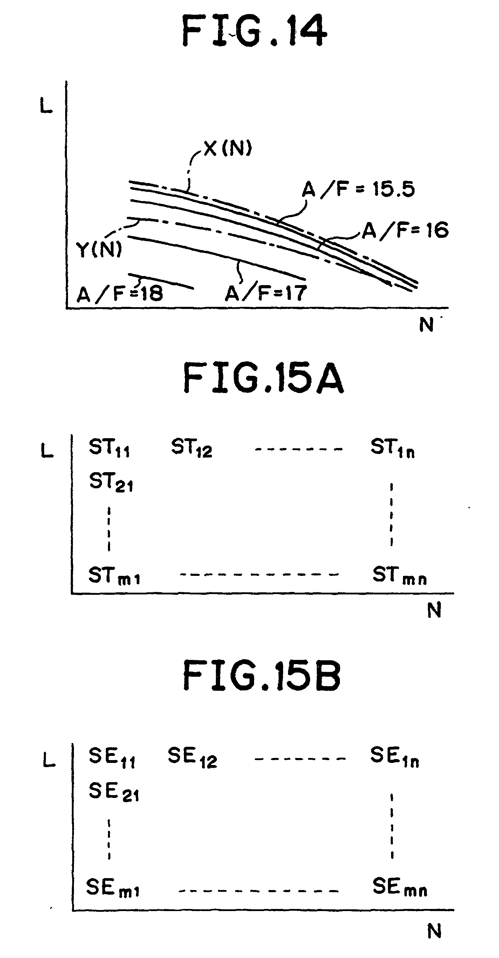

Fig. 14 shows an air-fuel ratio A/F in the operational area I. Referring to Fig. 14, curves indicated by A/F =15.5, A/F= 16, A/F =17 and A/F=18 represent the cases where the air-fuel ratio is 15.5, 16, 17 and 18 respectively. The air-fuel ratios between the respective curves are determined by means of proportional distribution. In the operational area I, the air-fuel ratio is lean. As the load requirement L becomes lower, the air-fuel ratio A/F is shifted toward the lean side.

In other words, as the load requirement L becomes lower, the exothermic value by means of combustion decreases. Accordingly, as the load requirement L becomes lower, the low-temperature combustion can be performed more easily even if the EGR rate has been reduced. If the EGR rate is reduced, the air-fuel ratio becomes larger. Therefore, as shown in Fig. 14, as the load requirement L becomes lower, the air-fuel ratio A/F is made larger. The larger the air-fuel ratio A/F becomes, the more the fuel consumption is improved. Thus, in order to set the air-fuel ratio toward the lean side to the maximum possible extent, according to this embodiment, the air-fuel ratio A/F is made larger as the load requirement L becomes lower.

The target opening degree ST of the throttle valve 16 that is required to set the air-fuel ratio to a target air-fuel ratio shown in Fig. 14 is preliminarily stored in the form of a map in the ROM 32 as a function of the load requirement L and the engine speed N, as can be seen from Fig. 15A. Further, the target opening degree SE of the EGR control valve 23 that is required to set the air-fuel ratio to the target air-fuel ratio is preliminarily stored in the form of a map in the ROM 32 as a function of the load requirement L and the engine speed N, as can be seen from Fig. 15B.

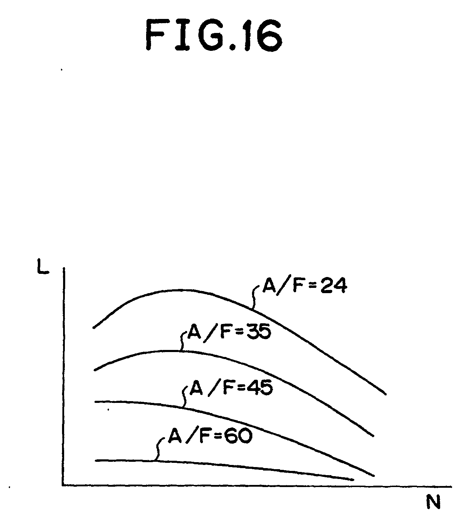

Fig. 16 shows a target air-fuel ratio when the second combustion mode, namely, the conventionally adopted combustion is performed. Referring to Fig. 16, curves indicated by A/F= 24, A/F= 35, A/F= 45 and A/F= 60 represent the cases where the air-fuel ratio is 24, 35, 45 and 60 respectively. The target opening degree ST of the throttle valve 16 and the target opening degree SE of the EGR control valve 23 are preliminarily stored in the form of a map as shown in Figs. 15A and 15B in the ROM 32 as a function of the load requirement L and the engine speed N.

In Fig. 1, the NOx absorber 19 disposed in the casing 20 has a carrier, for example, of alumina. Carried on this carrier are an alkaline metal such as potassium (K), sodium (Na), lithium (Li) and cesium (Cs), an alkaline earth metal such as barium (Ba) and calcium (Ca), at least one material selected from rare earth metals such as lanthanum (La) and yttrium (Y), and a noble metal such as platinum (Pt). The ratio of the air and the fuel (hydrocarbon) that have been supplied to the intake passage of the engine, the combustion chamber 5 and the exhaust passage upstream of the NOx absorber 19 is referred to as the air-fuel ratio of the exhaust gas that has flown into the NOx absorber 19. Whenthe air-fuel ratio of the inflow exhaust gas is lean, the NOx absorber 19 absorbs NOx. When the air-fuel ratio of the inflow exhaust gas is rich or equal to the stoichiometric air-fuel ratio, the NOx absorber 19 discharges the NOx absorbed therein.

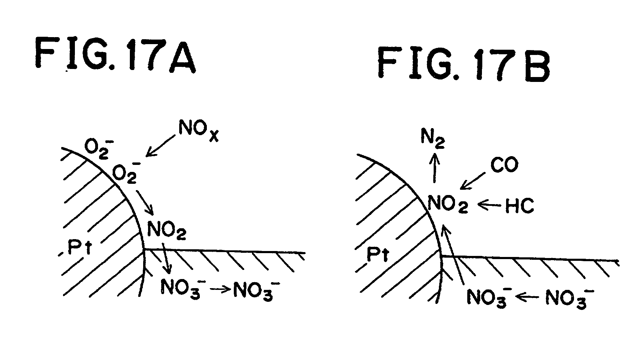

If disposed in the exhaust passage of the engine, the NOx absorber 19 actually performs the functions of absorbing and discharging NOx. However, the detailed mechanism of the functions of absorbing and discharging NOx is not completely clear. However, the functions of absorbing and discharging NOx are considered to be performed under the mechanism as shown in Figs. 17A and 17B. This mechanism will be explained hereinafter referring to an example where platinum (Pt) and barium (Ba) are carried on the carrier. However, even if another noble metal, an alkaline metal, an alkaline earth metal or a rare earth metal is employed, a similar mechanism works.

In the compression ignition type internal combustion engine shown in Fig. 1, combustion is normally performed in a state where the air-fuel ratio is lean. In the case where combustion is thus performed in a state where the air-fuel ratio is lean, the concentration of oxygen in exhaust gas is high. At this time, as shown in Fig. 17A, oxygen O₂ adheres to a surface of Pt in the form of O₂⁻ or O²⁻. On the other hand, the NO contained in the inflow exhaust gas reacts with O₂⁻ or O²⁻ on the surface of Pt and becomes NO₂ (2NO + O₂ → 2NO₂). Then, part of the NO₂ produced is oxidized on Pt, absorbed into the absorber, coupled with barium oxide (BaO), and diffused into the absorber in the form of a nitrate ion NO₃⁻ as shown in Fig. 17A. Thus, NOx is absorbed into the NOx absorber 19. As long as the concentration of oxygen in the inflow exhaust gas is high, NO₂ is produced on the surface of Pt. As long as the ability of the absorber to absorb NOx has not been exhausted, NO₂ is absorbed into the absorber and a nitrite ion NO₃⁻ is produced.

On the other hand, if the air-fuel ratio of inflow exhaust gas is made rich, the concentration of oxygen in the inflow exhaust gas decreases, so that the amount of NO₂ produced on the surface of Pt decreases. If the production amount of NO₂ has dropped, the reaction proceeds in a reverse direction (NO³⁻ → NO₂) and the nitrite ion NO³⁻ in the absorber is discharged therefrom in the form of NO₂. At this time, the NOx that has been discharged from the NOx absorber 19 is reduced by reacting with a large amount of unburnt hydrocarbon, namely, CO contained in the inflow exhaust gas, as can be seen from Fig. 17B. In this manner, if NO₂ has disappeared from the surface of Pt, NO₂ is discharged from the absorber continuously. Accordingly, if the air-fuel ratio of inflow exhaust gas is made rich, NOx is discharged from the NOx absorber 19 within a short period of time. Because the NOx thus discharged is reduced, there is no possibility of NOx being discharged into the atmosphere.

In this case, even if the air-fuel ratio of inflow exhaust gas is set to the stoichiometric air-fuel ratio, NOx is discharged from the NOx absorber 19. However, in the case where the air-fuel ratio of inflow exhaust gas is set to the stoichiometric air-fuel ratio, NOx is discharged from the NOx absorber 19 gradually. Therefore, it takes a relatively long time to completely discharge the NOx absorbed in the NOx absorber 19.

As described above, the NOx absorber 19 includes a noble metal such as Pt and thus has the function of oxidation. On the other hand, as described previously, when the operational state of the engine is in the operational area I and the low-temperature combustion is performed, soot is hardly generated. Instead, unburnt hydrocarbon is discharged from the combustion chamber 5 in the form of a precursor of soot or in a state prior to the precursor of soot. However, as described above, since the NOx absorber 19 has the function of oxidation, the unburnt hydrocarbon that has been discharged from the combustion chamber 5 is suitably oxidized by the NOx absorber 19.

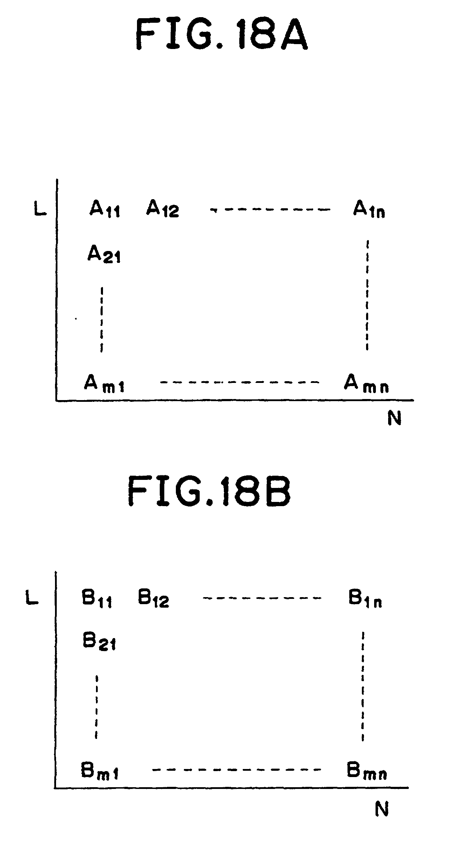

It is to be noted herein that the ability of the NOx absorber 19 to absorb NOx is limited. Hence, it is necessary to discharge NOx from the NOx absorber 19 before the ability to absorb NOx is exhausted. For this purpose, it is necessary to estimate an amount of NOx absorbed in the NOx absorber 19. Thus, according to this embodiment, the absorption amount A of NOx per unit time during the first combustion mode is preliminarily calculated as a function of the load requirement L and the engine speed N, in the form of a map as shown in Fig. 18A. The absorption amount B of NOx per unit time during the second combustion mode is preliminarily calculated as a function of the load requirement L and the engine speed N, in the form of a map as shown in Fig. 18B. By multiplying these absorption amounts A and B, the amount ΣNOₓ of NOx absorbed in the NOx absorber 19 is estimated.

In this embodiment, when the absorption amount ΣNO_{X} ofNOx exceeds a predetermined maximum allowable value MAX, NOx is discharged from the NOx absorber 19. That is, if the absorption amount ΣNOₓ of NOx has exceeded the maximum allowable value MAX during the low-temperature combustion, the air-fuel ratio in the combustion chamber 5 is temporarily made rich, whereby NOx is discharged from the NOx absorber 19. As described previously, if the air-fuel ratio is made rich during the low-temperature combustion, soot is hardly generated.

On the other hand, if the absorption amount ΣNOₓ of NOx has exceeded the maximum allowable value MAX during the second combustion, additional fuel Qa is injected while the exhaust valve 9 is open, as can be seen from Figs. 4 and 5. The amount of additional fuel Qa is determined such that the air-fuel ratio of the exhaust gas flowing into the NOx absorber 19 becomes rich. In other words, upon injection of additional fuel Qa, NOx is discharged from the NOx absorber 19.

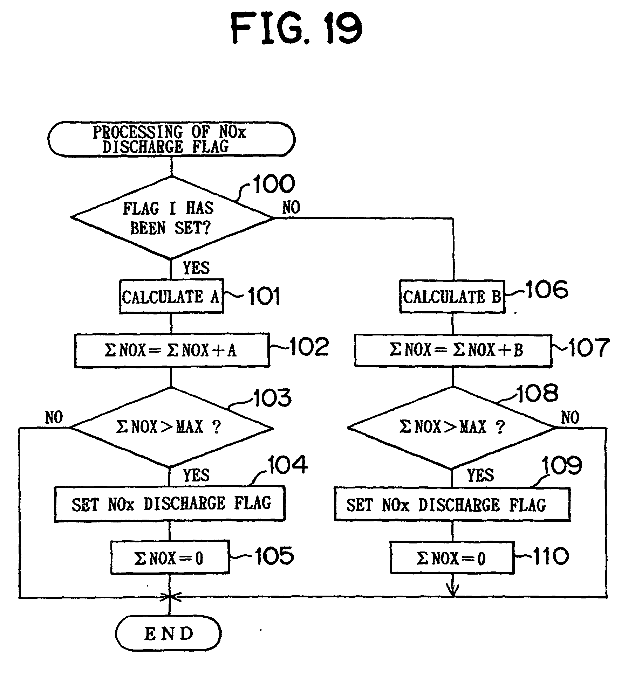

Fig. 19 shows a routine of processing an NOx discharge flag that is set when NOx is discharged from the NOx absorber 19. This routine is carried out as interruption handling at constant time intervals.

First of all, it is determined in step 100 whether or not a flag I indicating that the engine is in the operational area I has been set. If the flag I has been set, that is, if the engine is in the operational area I, the process proceeds to step 101 where the absorption amount A of NOx per unit time is calculated from the map shown in Fig. 18A. Then in step 102, A is added to the absorption amount ΣNOx of NOx. Then in step 103, it is determined whether or not the absorption amount ΣNOx of NOx has exceeded the maximum allowable value MAX. If ΣNOx > MAX, the process proceeds to step 104 where a processing of setting the NOx discharge flag for a predetermined period of time is performed. Then in step 105, ΣNOx is set to zero.

On the other hand, if it is determined in step 100 that the flag I has been reset, that is, if the engine is in the operational area II, the process proceeds to step 106 where the absorption amount B of NOx per unit time is calculated from the map shown in Fig. 18B. Then in step 107, B is added to the absorption amount ΣNOx of NOx. Then in step 108, it is determined whether or not the absorption amount ΣNOx of NOx has exceeded the maximum allowable value MAX. If ΣNOx > MAX, the process proceeds to step 109 where a processing of setting the NOx discharge flag for a predetermined period of time is performed. Then in step 110, ΣNOx is set to zero.

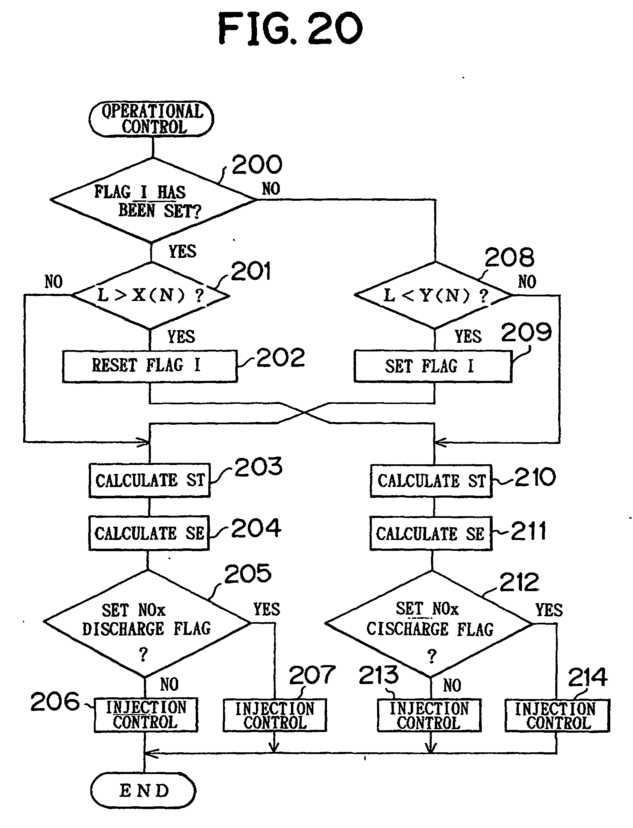

The operational control will now be described with reference to Fig. 20.

First of all, it is determined in step 200 whether or not the flag I indicating that the engine is in the operational area I has been set. If the flag I has been set, that is, if the engine is in the operational area I, the process proceeds to step 201 where it is determined whether or not the load requirement L has become larger than the first border X(N). If L≤X(N), the process proceeds to step 203 where the low-temperature combustion is performed.

Namely, in step 203, a target opening degree ST of the throttle valve 16 is calculated from the map shown in Fig. 15A, and the opening degree of the throttle valve 16 is set to the target opening degree ST. Then in step 204, a target opening degree SE of the EGR control valve 23 is calculated from the map shown in Fig. 15B, and the opening degree of the EGR control valve 23 is set to the target opening degree SE. Then in step 205, it is determined whether or not the NOx discharge flag has been set. If the NOx discharge flag has not been set, the process proceeds to step 206 where fuel injection is carried out such that the air-fuel ratio shown in Fig. 14 is achieved. At this time, the low-temperature combustion is performed under a lean air-fuel ratio.

On the other hand, if it is determined in step 205 that the NOx discharge flag has been set, the process proceeds to step 207 where fuel injection control is performed so as to make the average air-fuel ratio in the combustion chamber 5 rich. At this time, NOx is discharged from the NOx absorber 19.

On the other hand, if it is determined in step 201 that L > X(N), the process proceeds to step 202 where the flag I is reset. The process then proceeds to step 210 where the second combustion is performed.

Namely, in step 210, a target opening degree ST of the throttle valve 16 is calculated from the map shown in Fig. 17A, and the opening degree of the throttle valve 16 is set to the target opening degree ST. Then in step 211, a target opening degree SE of the EGR control valve 23 is calculated from the map shown in Fig. 17B, and the opening degree of the EGR control valve 23 is set to the target opening degree SE. It is then determined in step 212 whether or not the NOx discharge flag has been set. If the NOx discharge flag has not been set, the process proceeds to step 213 where fuel injection is carried out such that the air-fuel ratio shown in Fig. 16 is achieved. At this time, the second combustion is performed under a lean air-fuel ratio.

On the other hand, if it is determined in step 212 that the NOx discharge flag has been set, the process proceeds to step 214 where, first of all, the main injection Qm (Fig. 5) is carried out such that the air-fuel ratio shown in Fig. 16 is achieved, namely, that the second combustion mode is performed under a lean air-fuel ratio. Then, as shown in Figs. 4 and 5, additional fuel Qa is injected while the exhaust valve 9 is open, such that the air-fuel ratio of the exhaust gas flowing into the NOx absorber 19 becomes rich. Thereby, NOx is discharged from the NOx absorber 19.

As shown in Fig. 4, part of the additional fuel that has been injected while the exhaust valve 9 is open hits the back face of the shade portion of the exhaust valve 9, rebounds therefrom and is introduced into the exhaust port 10. Accordingly, the amount of injected fuel that adheres to an inner wall surface of a cylinder bore can be reduced. As a result, it is possible to inhibit the generation of unburnt hydrocarbon and to prevent lube oil from being diluted by adherent fuel.

If the flag I has been reset, during the following processing cycle, the process proceeds from step 200 to step 208, where it is determined whether or not the load requirement L has become lower than the second border Y(N). If L ≥ Y(N), the process proceeds to step 210 where the second combustion is performed under a lean air-fuel ratio.

On the other hand, if it is determined in step 208 that L < Y(N), the process proceeds to step 209 where the flag I is set. The process then proceeds to step 203 where the low-temperature combustion is performed.

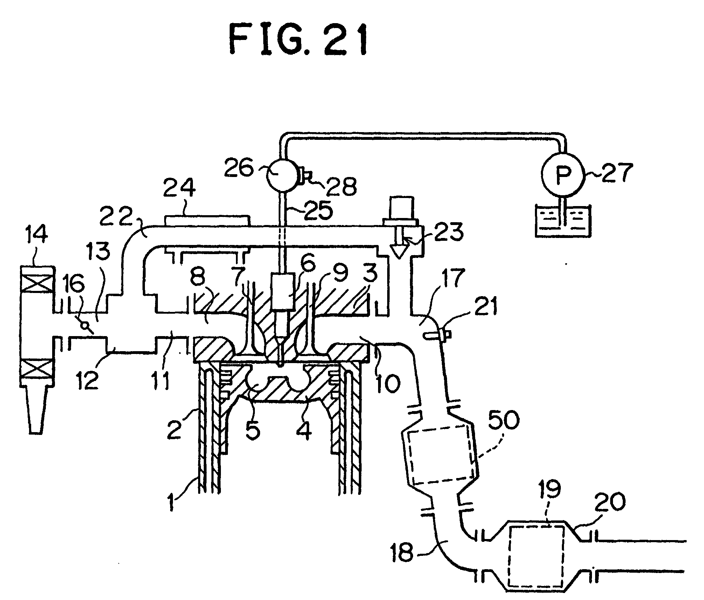

In the aforementioned embodiment, as shown in Fig. 21, a catalyst 50 having the function of oxidation, such as an oxidizing catalyst or a three-way catalyst, may be disposed in the exhaust passage upstream of the NOx absorber 19.

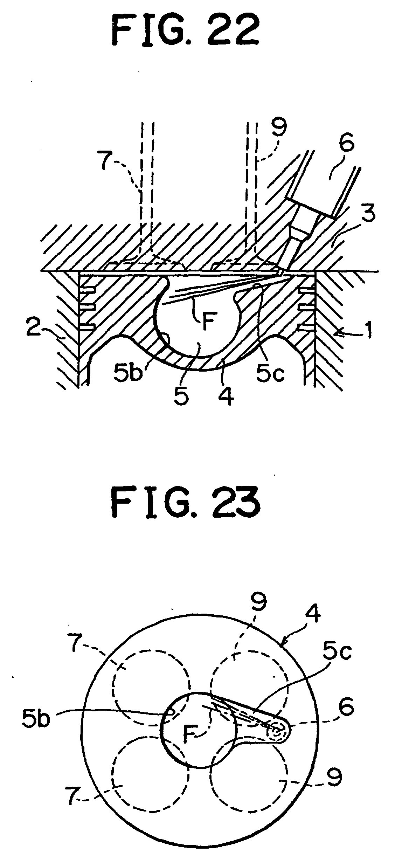

Furthermore, as shown in Figs. 22 and 23, a generally spherical cavity 5b is formed in the top face of the piston 4. Still further, a guide groove 5c, which is connected to an inner peripheral face of the cavity 5b tangentially and extends below one of the exhaust valves 9, is formed in the top face of the piston 4. Further, the fuel injection valve 6 is disposed between a pair of the exhaust valves 9 and around the inner wall surface of the cylinder head above an outer end portion of the guide groove 5c. The fuel injection valve 6 has a nozzle hole, from which fuel F is injected. The thus-injected fuel F passes through the guide groove 5c and hits the inner peripheral face of the cavity 5b tangentially. At this time, the inner peripheral face of the cavity 5b is covered with a thin film of fuel, which is gradually diffused and causes combustion.

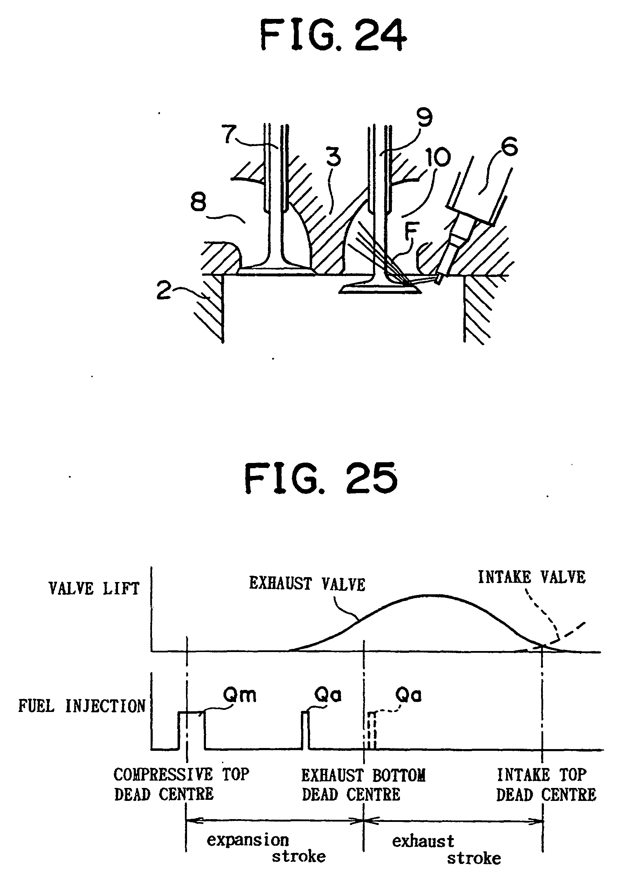

As shown in Figs. 22 and 23, the fuel spray F proceeds along the lower side of the exhaust valve 9. Therefore, if additional fuel is injected upon the opening of the exhaust valve 9, the entire fuel spray F hits the back face of the shade portion of the exhaust valve 9, rebounds therefrom and flows into the exhaust port 10, as can be seen from Fig. 24. Accordingly, in this case, at the time of injection of additional fuel Qa, the injected fuel hardly adheres to the inner wall surface of the cylinder bore.

The relationship between lift amounts of the intake and exhaust valves and fuel injection as shown in Fig. 5 may be changed into the relationship as shown in Fig. 25. In this case, when NOx should be discharged from the NOx absorber 19 during the second combustion mode, additional fuel Qa is injected in the latter half of an expansion stroke, as indicated by a solid line in Fig. 25. Alternatively, as indicated by a broken line in Fig. 25, when the lift amount of the exhaust valve 9 is small, that is, while the injected fuel does not hit the exhaust valve 9, additional fuel Qa is injected.

A second embodiment of the present invention will now be described.

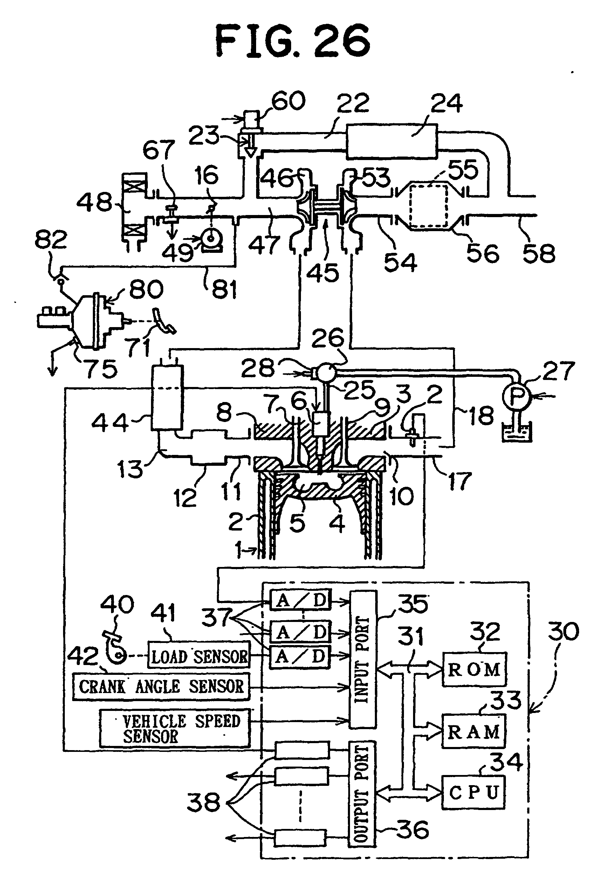

Fig. 26 shows the second embodiment of the present invention. In Figs. 26 and 1, like components are denoted by like reference numerals.

In the second embodiment, the surge tank 12 is connected with an outlet portion of a compressor 46 of a supercharger, for example, an exhaust turbocharger 45 via the intake duct 13 and an inter cooler 44. An inlet portion of the compressor 46 is connected with an air cleaner 48 via an air suction pipe 47. Disposed in the air suction pipe 47 is the throttle valve 16, which is driven by a step motor 19.

On the other hand, the exhaust port 10 is connected with an inlet portion of an exhaust turbine 53 of the exhaust turbocharger 45 via the exhaust manifold 17 and the exhaust pipe 18. An outlet portion of the exhaust turbine 53 is connected with a catalytic converter 56 via an exhaust pipe 54. The catalytic converter 56 incorporates a catalyst 55 that has the function of oxidation.

An exhaust pipe 58 communicating with an outlet portion of the catalytic converter 56 and the air suction pipe downstream of the throttle valve 16 are connected with each other via the EGR passage 22. Disposed in the EGR passage 22 is the EGR control valve 23, which is driven by a step motor 60.

Further, a mass flowmeter 67 for detecting a mass of intake air is disposed in the air suction pipe 47 upstream of the throttle valve 16. An output signal from the mass flowmeter 67 is inputted to the input port 35 of the ECU 30 via the corresponding AD converter 37. Still further, an output pulse indicative of a vehicle speed, which is outputted from a vehicle speed sensor 43, is inputted to the input port of the ECU 30.

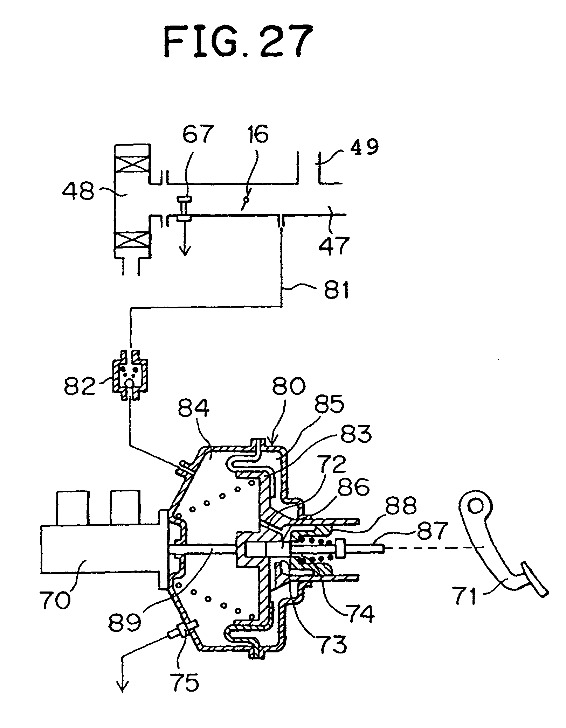

The air suction pipe 47 downstream of the throttle valve 16 is connected with a brake booster 80 via a negative pressure conduit 81. As shown in Fig. 27, the brake booster 80 is provided with a power piston 83, first and second chambers 84 and 85 formed on opposite sides of the power piston 83, an operating rod 87 equipped with a plunger 86, and an operating valve 88. Fixed to the power piston 83 is a push rod 89, which drives a master cylinder 70 generating a brake fluid pressure. Further, the operating rod 87 communicates with a brake pedal 71.

The negative pressure conduit 81 communicates with the first chamber 84. Disposed in the negative pressure conduit 81 is a check valve 82 that allows air to flow only from the first chamber 84 to the air suction pipe 47. If a negative pressure higher than that in the first chamber 84 is generated in the air suction pipe 47, the check valve 82 is opened. Thus, the first chamber 84 is maintained at a maximum negative pressure that is generated in the air suction pipe 47.

As shown in Fig. 27, when the brake pedal 71 is released, the first chamber 84 and the second chamber 85 are in communication with each other via a pair of communication paths 72 and 73. Thus, an equal pressure is generated in the first chamber 84 and the second chamber 85. Upon depression of the brake pedal 71, the operating valve 88 moves leftwards together with the operating rod 87. As a result, the communication path 72 is blocked by the operating valve 88. In order for the plunger 86 to be spaced apart from the operating valve 88, the second chamber 85 is opened to the atmosphere via an atmospheric communication path 74, so that the second chamber 85 is subjected to an atmospheric pressure. Accordingly, there is generated a differential pressure between the first chamber 84 and the second chamber 85. The differential pressure moves the power piston 83 leftwards.

On the other hand, upon release of the brake pedal 71, the atmospheric communication path 74 is closed by the plunger 86 and the respective communication paths 72 and 73 are opened. Therefore, the first chamber 84 and the second chamber 85 are again brought into communication with each other. Installed in the brake booster 80 is a pressure sensor 75 for detecting an absolute pressure in the first chamber 84. An output signal from the pressure sensor 75 is inputted to the input port 35 via the corresponding AD converter 37.

It is to be noted herein that an oxidizing catalyst, a three-way catalyst or the NOx absorber of the first embodiment can be employed as the catalyst 55.

As described with reference to Fig. 10, the amount of EGR gas needs to be increased as the load requirement becomes higher.

However, according to this embodiment, in the case where a supercharging operation is not performed, the total amount X of inlet gas admitted into the combustion chamber 5 has an upper limit of Y. Accordingly, in an area in Fig. 10 where the load requirement is larger than L0, unless the proportion of EGR gas is reduced in accordance with an increase in load requirement, the air-fuel ratio cannot be maintained at the stoichiometric air-fuel ratio. In other words, in the case where the supercharging operation is not performed, if an attempt is made to maintain the air-fuel ratio at the stoichiometric air-fuel ratio in the area where the load requirement is larger than L0, the EGR rate drops in proportion to an increase in load requirement. That is, in the area where the load requirement is larger than L0, the temperature of fuel and ambient gas cannot be kept lower than a temperature at which soot is generated.

As shown in Fig. 26, if EGR gas is recirculated to an inlet side of the supercharger, namely, to the air suction pipe 47 of the exhaust turbocharger 45 via the EGR passage 22, in the area where the load requirement is larger than L0, the EGR rate can be maintained at 55% or more, for example, at 70%. Besides, the temperature of fuel and ambient gas can be kept lower than a temperature at which soot is generated. That is, if EGR gas is recirculated so as to set the EGR rate in the air suction pipe 47 to, for example, 70%, the EGR rate of the inlet gas that has been pressurised by the compressor 46 of the exhaust turbocharger 45 also becomes 70%. Until the pressurisation by the compressor 46 reaches its limit, the temperature of fuel and ambient gas can be kept lower than a temperature at which soot is generated. Accordingly, it is possible to enlarge an operational area of the engine where low-temperature combustion can be realised.

If the EGR rate is set to 55% or more in the area where the load requirement is larger than L0, the EGR control valve is opened completely and the throttle valve 16 is closed slightly.

In the aforementioned first embodiment, it is determined, based on the relationship between the load requirement and the first border X(N) or the second border Y(N), whether or not a transition between the operational area I and the operational area II as shown in Fig. 11 has been made. However, according to this embodiment, such determination is made based on the torque requirement TQ instead of the load requirement L.

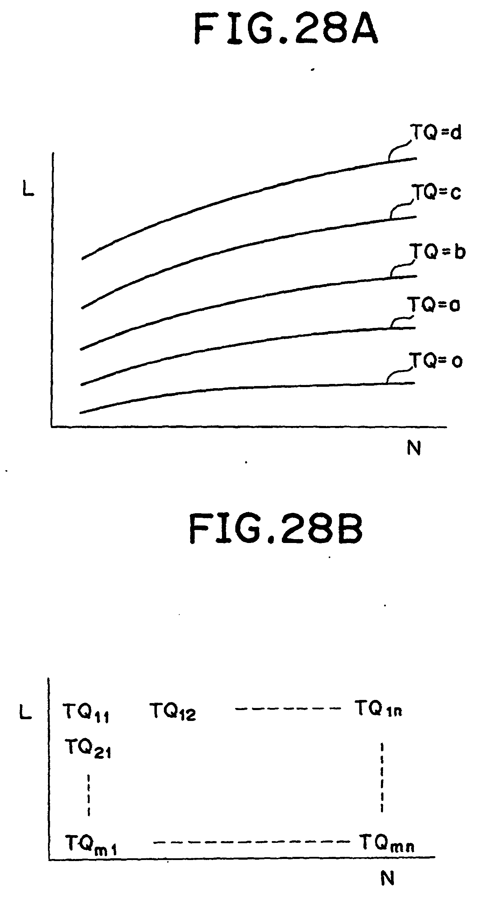

Fig. 28A shows a relationship among torque requirement TQ, load requirement L (i.e., depression amount of the accelerator pedal 40) and engine speed N. Respective curves in Fig. 28A represent constant-torque curves. The curve indicated by TQ = 0 shows that the torque is zero. The other curves show that the torque gradually becomes higher in the order of TQ = a, TQ = b, TQ = c and TQ= d. The torque requirement TQ shown in Fig. 28A is preliminarily stored in the form of a map in the ROM 32 as a function of the depression amount L of the accelerator pedal 20 and the engine speed N, as can be seen from Fig. 28B. In this embodiment, first of all, a torque requirement TQ corresponding to a load requirement L and an engine speed N is calculated from a map shown in Fig. 28B. Based on the torque requirement TQ, a fuel injection amount or the like is calculated.

The relationship between the torque requirement TQ and the target air-fuel ratio A/F is identical to the relationship between the load requirement L and the target air-fuel ratio A/F as shown in Fig. 14. That is, in the operational area I, the target air-fuel ratio A/F is increased in proportion to a decrease in torque requirement TQ.

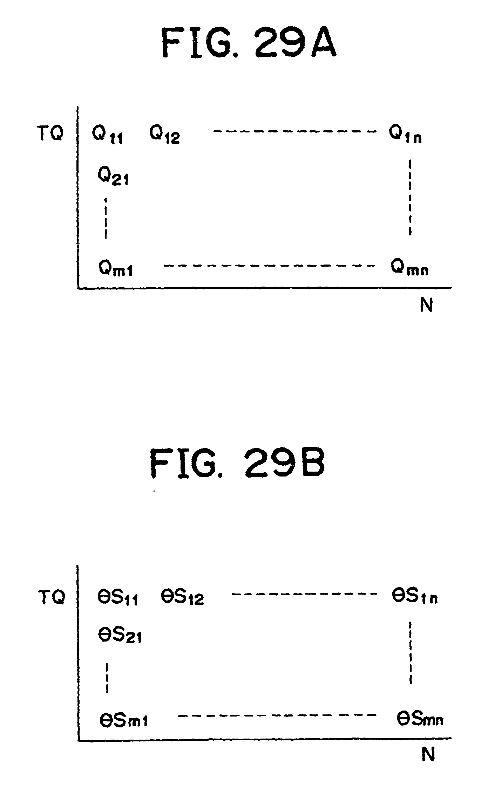

The injection amount Q in the operational area I is preliminarily stored in the form of a map in the ROM 32 as a function of the torque requirement TQ and the engine speed N, as can be seen from Fig. 29A. The injection start timing θS is also preliminarily stored in the form of a map in the ROM 32, as can be seen from Fig. 29B.

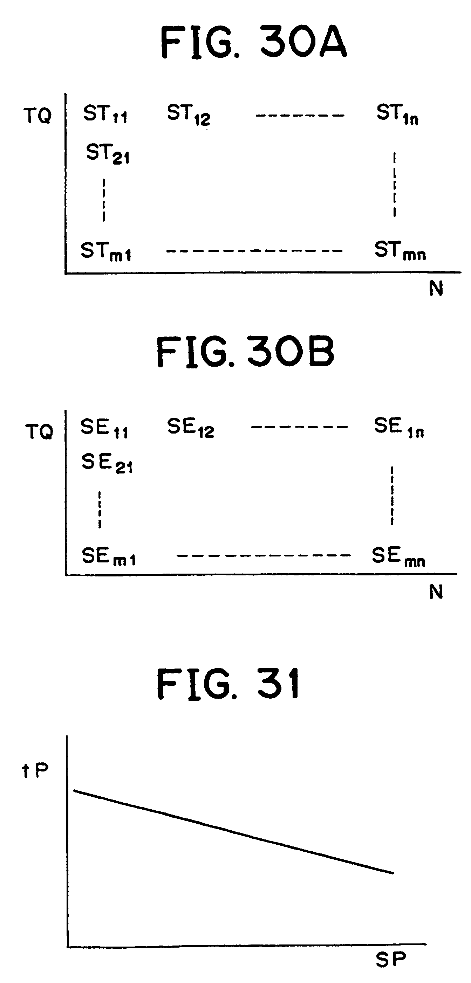

Further, as is the case with Figs. 15A and 15B, the target opening degree ST of the throttle valve 16 and the target opening degree SE of the EGR control valve 23 that are required to set the air-fuel ratio to a target air-fuel ratio shown in Fig. 14 are preliminarily stored in the form of a map in the ROM 32, as can be seen from Figs. 30A and 30B.

In the brake booster 80 shown in Fig. 27, the greater the difference in absolute pressure between the first chamber 84 and the second chamber 85 becomes, the larger the braking force at the time of a braking operation becomes. In other words, as the absolute pressure in the first chamber 84 becomes smaller, that is, as the negative pressure in the first chamber 84 becomes larger, the braking force at the time of a braking operation increases. In order to brake the vehicle suitably, the higher the vehicle speed becomes, the larger the required braking force becomes. Accordingly, it is preferable that the minimum required negative pressure in the first chamber 84 be increased in proportion to an increase in vehicle speed. Therefore, according to the second embodiment, a target threshold value tP of the absolute pressure in the first chamber 84, which decreases in proportion to an increase in vehicle speed SP, is preliminarily stored, as can be seen from Fig. 31. The absolute pressure in the first chamber 84 is prevented from exceeding the target threshold value tP.

As described in the first embodiment, when an idling operation is performed under the low-temperature combustion, the throttle valve 16 and the EGR control valve 23 are closed until they are closed almost completely. Hence, at this time, a negative pressure is generated in the air suction pipe 47 downstream of the throttle valve 16. Even when the idling operation is not performed, if the torque requirement TQ is small, the opening degrees of the throttle valve 16 and the EGR control valve 23 become small, as in the case where the load requirement L is small in Fig. 13. Hence, also at this time, a negative pressure is generated in the air suction pipe 47 downstream of the throttle valve 16.

In the second embodiment, during deceleration of the vehicle, fuel injection is stopped and the throttle valve 16 is closed completely. If the throttle valve 16 is closed completely, the negative pressure in the air suction pipe 57 downstream of the throttle valve 16 and the negative pressure in the combustion chamber 5 become extremely high, so that a problem is caused. That is, the lube oil between the piston 4 and the inner wall surface of the cylinder bore is sucked out into the combustion chamber 5. In order to avoid such a problem by slightly reducing the negative pressure in the combustion chamber 5, according to this embodiment, when the throttle valve 16 is closed completely, the EGR control valve 23 is opened and maintained at a predetermined opening degree. At this time, a high negative pressure is generated in the air suction pipe 57 downstream of the throttle valve 16.

Thus, in this embodiment, if the torque requirement TQ becomes small, a high negative pressure is generated in the air suction pipe 47 downstream of the throttle valve 16. Even during deceleration of the vehicle, a high negative pressure is generated in the air suction pipe 47 downstream of the throttle valve 16. Therefore, the absolute pressure in the first chamber 84 of the brake booster 80 is normally much lower than the target threshold value tP shown in Fig. 31. However, for some reason, the absolute pressure in the first chamber 84 may become equal to or higher than the target threshold value tP.

In view of this, according to the present invention, if the absolute pressure in the first chamber 84 of the brake booster 80 has become higher than the target threshold value tP, the throttle valve 16 or the EGR control valve 23 is gradually opened during the low-temperature combustion. Namely, if the throttle valve 16 is opened, the absolute pressure in the air suction pipe 57 downstream of the throttle valve 16 drops. Besides, if the EGR control valve 23 is opened, the absolute pressure in the air suction pipe 47 downstream of the throttle valve 16 also drops. Hence, by opening the throttle valve 16 or the EGR control valve 23, the absolute pressure in the first chamber 84 can be reduced.

More specifically, if the absolute pressure in the first chamber 84 of the brake booster 80 has become higher than the target threshold value tP, first of all, the throttle valve 16 is opened gradually. If the throttle valve 16 is closed, the air-fuel ratio gradually becomes smaller. If the air-fuel ratio has reached a predetermined value, for example, the stoichiometric air-fuel ratio, the EGR control valve 23 is then opened gradually.

Namely, the EGR rate has a great effect on the low-temperature combustion. In this case, the EGR rate changes less drastically in changing an opening degree of the throttle valve 16 than in changing an opening degree of the EGR control valve 23. Moreover, at this time, the absolute pressure in the air suction pipe 47 downstream of the throttle valve 16 drops greatly. Thus, according to this embodiment, the throttle valve 16 is opened prior to the EGR control valve 31. If the EGR control valve23 is opened and the EGR rate drops, the optimal injection timing is retarded. Accordingly, as the EGR control valve 23 is closed, the injection start timing is retarded.

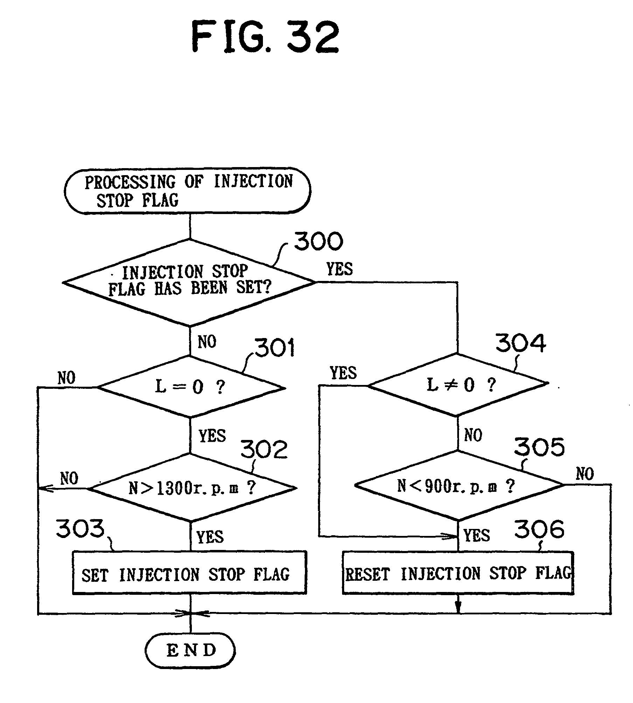

A routine of processing an injection stop flag for stopping fuel injection will now be described with reference to Fig. 32.

First of all, it is determined in step 300 whether or not the injection stop flag has been set. If the injection stop flag has not been set, the process proceeds to step 301 where it is determined whether or not the load requirement L (the depression amount of the accelerator pedal) is zero. If L = 0, the process proceeds to step 302 where it is determined whether or not the engine speed N is higher than a certain value, for example, 1300rpm. If N > 1300rpm, the process proceeds to step 303. That is, if L = 0 and N > 1300rpm, it is determined that the vehicle is decelerated. Thus, the process proceeds to step 303 where the injection stop flag is set.

If the injection stop flag has been set, the process proceeds from step 300 to step 304, where it is determined whether or not the load requirement L is zero. If L=0, the process proceeds to step 305 where it is determined whether or not the engine speed N has dropped below a certain value, for example, 900rpm. If N < 900rpm, the process proceeds to step 306 where the injection stop flag is reset. On the other hand, if it is determined in step 304 that L≠0, the process proceeds to step 306 where the injection stop flag is reset.

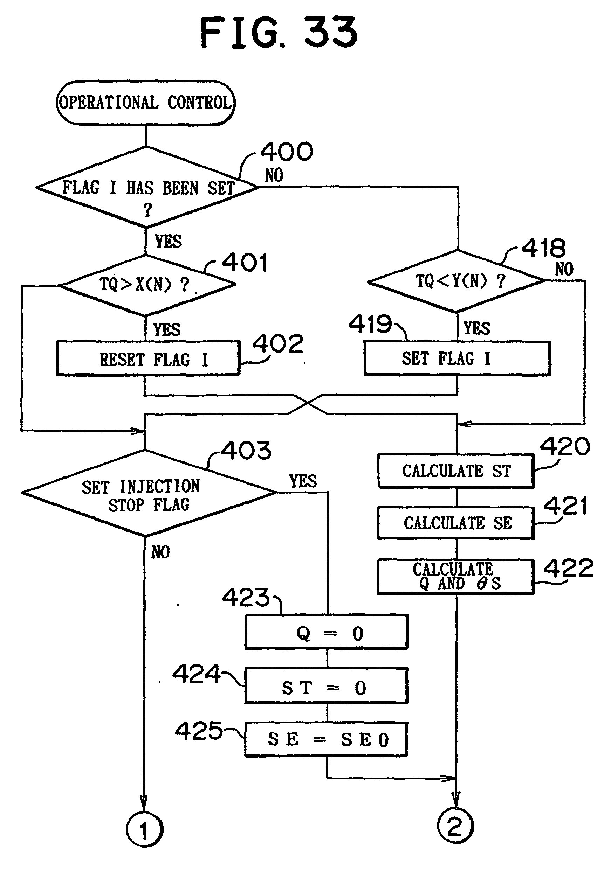

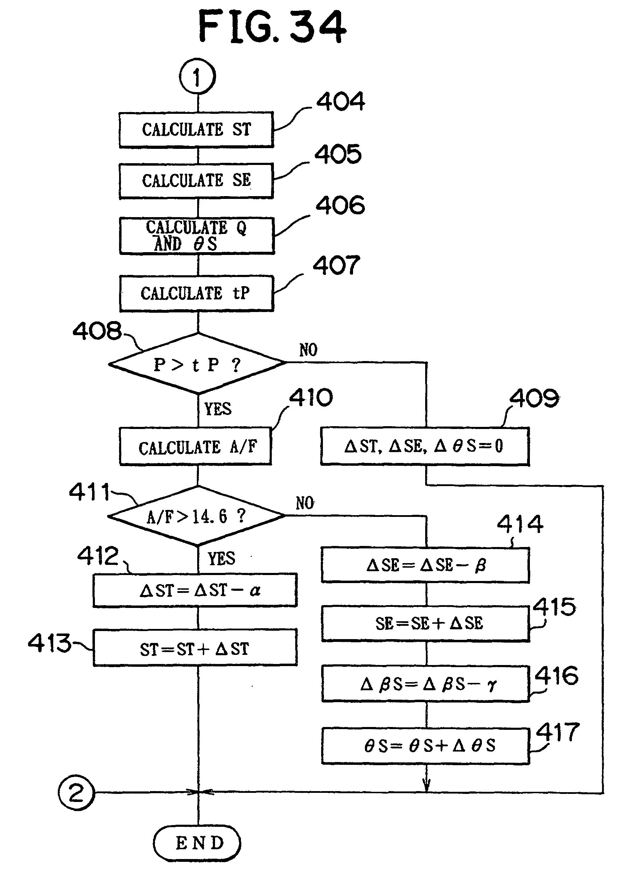

The operational control will now be described with reference to Figs. 33 and 34.

First of all, it is determined in step 400 whether or not the flag I indicating that the engine is in the operational area I has been set. If the flag I has been set, that is, if the engine is in the operational area I, the process proceeds to step 401 where it is determined whether or not the torque requirement has become larger than the first border X(N). If TQ ≤ X(N), the process proceeds to step 403 where it is determined whether or not the injection stop flag has been set. If the injection stop flag has not been set, the process proceeds to step 404 where the low-temperature combustion is performed.

That is, in step 404, a target opening degree ST of the throttle valve 16 is calculated from the map shown in Fig. 30A. Then in step 405, a target opening degree of the EGR control valve 23 is calculated from the map shown in Fig. 30B. Then in step 406, an injection amount Q is calculated from the map shown in Fig. 29A, and an injection start timing θS is calculated from the map shown in Fig. 29B. Then in step 407, based on a vehicle speed detected by the vehicle speed sensor 43, a target threshold value tP in the first chamber 84 of the brake booster 80 is calculated from the relationship shown in Fig. 31. Then, it is determined in step 408 whether or not the absolute pressure P in the first chamber 84 detected by the pressure sensor 75 is higher than the target threshold value tP. If P ≤ tP, the process proceeds to step 409 where respective correction values ΔST, ASE and ΔθS are set to zero.

On the other hand, if it is determined in step 408 that P > tP, the process proceeds to step 401 where an actual air-fuel ratio is calculated from the mass flow rate of intake air detected by the mass flowmeter 67 and the injection amount Q. Then, it is determined in step 411 whether or not the actual air-fuel ratio A/F is larger than 14.6. If the actual air-fuel ratio ≥ 14.6, the process proceeds to step 412 where a constant value α is subtracted from the correction value ΔST for the target opening degree of the throttle valve 16. Then in step 413, an ultimate target opening degree ST (= ST + ΔST) is calculated by adding the correction value ΔST to the target opening degree ST of the throttle valve 16. Accordingly, if the actual air-fuel ratio > 14.6, the throttle valve 16 is gradually closed.

On the other hand, if A/F ≤ 14.6, the process proceeds to step 414 where a constant value β is subtracted from the correction value ΔSE for the target opening degree of the EGR control valve 23. Then in step 415, an ultimate target opening degree SE (= SE + ASE) is calculated by adding the correction value ASE to the target opening degree SE of the EGR control valve 23. Then in step 416, a constant value γ is subtracted from the target injection start timing θS. Then in step 417, an ultimate target injection start timing θS (= θS + ΔθS) is calculated by adding the correction value ΔθS to the target injection start timing θS. Hence, if the actual air-fuel ratio ≤ 14.6, the EGR control valve 23 is gradually closed and the injection start timing θS is gradually retarded.

On the other hand, if it is determined in step 410 that TQ > X(N), the process proceeds to step 402 where the flag I is reset. The process then proceeds to step 420 where the second combustion is performed.

That is, in step 420, a target opening degree ST of the throttle valve 16 is calculated from the map shown in Fig. 30A. Then in step 421, a target opening degree SE of the EGR control valve 31 is calculated from the map shown in Fig. 30B. Then in step 422, an injection amount Q is calculated from the map shown in Fig. 29A, and an injection start timing θS is calculated from the map shown in Fig. 29B.

If the flag I has been reset, during the following processing cycle, the process proceeds from step 400 to step 418, where it is determined whether or not the torque requirement TQ has become lower than the second border Y(N). If TQ ≥ Y(N), the process proceeds to step 420 where the second combustion mode is performed. On the other hand, if it is determined in step 418 that TQ < Y(N), the process proceeds to step 419 where the flag I is set. The process then proceeds to step 403.

If it is determined in step 403 that the injection stop flag has been set, the process proceeds to step 423 where the injection amount Q is set to zero. Then in step 424 , the target opening degree of the throttle valve 16 is set to zero. Namely, the throttle valve 16 is closed completely. Then in step 425, the target opening degree SE of the EGR control valve 23 is set to a predetermined opening degree SEO.

According to the invention, there is provided an internal combustion engine (1) in which a first combustion mode and second combustion mode are selectively performed. During the first combustion mode, a combustion chamber (5) contains EGR gas of an amount larger than an amount where a generation amount of soot reaches its peak, so that soot is hardly generated. During the second combustion mode, the combustion chamber (5) contains EGR gas of an amount smaller than the amount where the generation amount of soot reaches its peak. A pollutant absorber (19), preferably a NOx absorber, is disposed in an engine exhaust passage (18). In discharging NOx from the NOx absorber (19), while the first combustion mode is performed, the air-fuel ratio in the combustion chamber (5) is made rich. On the other hand, while the second combustion mode is performed, additional fuel (F) is injected into the combustion chamber in the latter half of an expansion stroke or during an exhaust stroke.

## Claims

1. An internal combustion engine (1) wherein in response to an increase of inactive gas in a combustion chamber (5), a generation amount of soot gradually increases and reaches its peak and wherein in response to a further increase of inactive gas in the combustion chamber (5), a temperature of fuel and ambient gas in the combustion chamber (5) during combustion becomes lower than a temperature at which soot is produced so that soot is hardly generated, **characterized in that**:
the internal combustion engine (1) is provided with a switching means (30) for selectively switching between a first combustion mode and a second combustion mode, wherein
during the first combustion mode, the combustion chamber (5) contains inactive gas of an amount larger than an amount where a generation amount of soot reaches its peak, so that soot is hardly generated, and wherein
during the second combustion mode, the combustion chamber (5) contains inactive gas of an amount smaller than an amount where a generation amount of soot reaches its peak; and
additional fuel is injected from a fuel injection valve (6) in the latter half of an expansion stroke or during an exhaust stroke, so that an air-fuel ratio of exhaust gas flowing into a pollutant absorber (19), preferably a NOx absorber, is set to a stoichiometric air-fuel ratio or made rich such that pollutants, preferably NOx, are discharged from the pollutant absorber (19) during the second combustion mode.

2. An internal combustion engine (1) according to claim 1, **characterized in that** when NOx is discharged from the NOx absorber during the second combustion mode, upon opening of an exhaust valve (9), additional fuel is injected from the fuel injection valve (6) toward a space between a back face of a shade portion of the exhaust valve and an exhaust port (10).

3. An internal combustion engine (1) according to claim 2, **characterized in that** the additional fuel is injected onto the back face of the shade portion of the exhaust valve.

4. An internal combustion engine (1) according to any of claims 1 to 3, **characterized in that** when NOx is discharged from the NOx absorber (19) during the first combustion mode, an air-fuel ratio in the combustion chamber (5) during combustion is temporarily set to the stoichiometric air-fuel ratio or made rich.

5. An internal combustion engine (1) according to any of claims 1 to 4, **characterized in that** a catalyst (50, 55) having a function of oxidation is disposed in an engine exhaust passage (18, 54, 58).

6. An internal combustion engine (1) according to any of claims 1 to 5, **characterized in that** the internal combustion engine (1) is provided with an exhaust gas recirculation device (22, 23, 24) for recirculating exhaust gas discharged from the combustion chamber (5) into an engine intake passage (8) and **in that** the inactive gas is composed mainly of exhaust recirculation gas.

7. An internal combustion engine (1) according to claim 6, **characterized in that** an exhaust gas recirculation rate preferably during the first combustion mode is about 55% or more.

8. An internal combustion engine (1) according to any of claims 1 to 7, **characterized in that** the first combustion mode is performed on a low-load side of an operational area of the engine (1) and **in that** the second combustion mode is performed on a high-load side.

9. An internal combustion engine (1) according to any of claims 1 to 8, **characterized in that** a throttle valve (16) is disposed in an engine intake passage (47) and **in that** a negative pressure generated in the intake passage (47) downstream of the throttle valve is introduced into a brake booster (80).

10. An internal combustion engine (1) according to claim 9, **characterized in that** if the negative pressure introduced into the brake booster (80) has become lower than a preliminarily set negative pressure, an opening degree of the throttle valve (16) is reduced.

11. An internal combustion engine (1) according to claim 10, **characterized in that** the preliminarily set negative pressure is increased as a vehicle speed becomes higher.

12. An internal combustion engine (1) according to claim 9 as far as this claim refers back to claim 6, **characterized in that**:
that the inactive gas is composed of exhaust recirculation gas that is supplied to the intake passage (47) downstream of the throttle valve (16);
the exhaust recirculation device comprises an exhaust gas recirculation control valve (23) for controlling a feed rate of the exhaust recirculation gas; wherein the exhaust recirculation gas is supplied to the intake passage (47) downstream of the throttle valve (16); and
if the negative pressure introduced into the brake booster (80) has become lower than the preliminarily set negative pressure, first of all, an opening degree of the throttle valve (16) is reduced, and then, if the negative pressure introduced into the brake booster (80) is still lower than the preliminarily set negative pressure, an opening degree of the exhaust gas recirculation control valve (23) is reduced.

13. An internal combustion engine (1) according to claim 12, **characterized in that** if the opening degree of the exhaust gas recirculation control valve (23) has been reduced, a fuel injection timing is retarded.

14. An internal combustion engine (1) according to any of claims 9 to 13, **characterized in that** the opening degree of the throttle valve (16) is reduced until the air-fuel ratio assumes a predetermined value.

15. An internal combustion engine (1) according to any of claims 1 to 14 , **characterized in that** the catalyst (50, 55) is composed of at least one of an oxidizing catalyst, a three-way catalyst and an NOx absorber.

16. An internal combustion engine (1) according to any of claims 1 to 15, **characterized in that** the fuel injection valve (6) is disposed in the combustion chamber (5).

## Patentansprüche

1. Verbrennungsmotor (1), bei welchem als Reaktion auf eine Zunahme von inaktivem Gas in einer Verbrennungskammer (5) eine erzeugte Rußmenge allmählich zunimmt und ihren Höchstwert erreicht und bei welchem als Reaktion auf eine weitere Zunahme von inaktivem Gas in der Verbrennungskammer (5) eine Temperatur von Kraftstoff und umgebendem Gas in der Verbrennungskammer (5) während der Verbrennung unter eine Temperatur sinkt, bei welcher Ruß erzeugt wird, sodass kaum Ruß erzeugt wird,
**dadurch gekennzeichnet, dass**:
der Verbrennungsmotor (1) mit einem Schaltmittel (30) zum selektiven Schalten zwischen einem ersten und einem zweiten Verbrennungsmodus ausgestattet ist,
wobei
die Verbrennungskammer (5) während des ersten Verbrennungsmodus eine inaktive Gasmenge enthält, die größer ist als eine Menge, bei der eine erzeugte Rußmenge ihren Höchstwert erreicht, sodass kaum Ruß erzeugt wird, und wobei
die Verbrennungskammer (5) während des zweiten Verbrennungsmodus eine inaktive Gasmenge enthält, die kleiner ist als eine Menge, bei der eine erzeugte Rußmenge ihren Höchstwert erreicht; und
während der zweiten Hälfte eines Arbeitstakts oder während eines Ausstoßtakts durch ein Kraftstoffeinspritzventil (6) zusätzlicher Kraftstoff eingespritzt wird, sodass ein Luftkraftstoffverhältnis des in den Abgasabsorber (19), vorzugsweise einen NOx-Absorber, strömenden Abgases stöchiometrisch oder fett eingestellt wird, sodass Umweltgifte wie vorzugsweise NOx während des zweiten Verbrennungsmodus aus dem Abgasabsorber (19) freigesetzt werden.

2. Verbrennungsmotor (1) nach Anspruch 1, **dadurch gekennzeichnet, dass** nach dem Öffnen eines Auslassventils (9) zusätzlicher Kraftstoff aus dem Kraftstoffeinspritzventil (6) in einen Raum zwischen einer Rückwand eines Spaltteils des Auslassventils und einer Abgasöffnung (10) gespritzt wird, wenn während des zweiten Verbrennungsmodus NOx aus dem NOx-Absorber freigesetzt wird.

3. Verbrennungsmotor (1) nach Anspruch 2, **dadurch gekennzeichnet, dass** der zusätzliche Kraftstoff auf die Rückwand des Spaltteils des Auslassventils gespritzt wird.

4. Verbrennungsmotor (1) nach einem der Ansprüche 1 bis 3, **dadurch gekennzeichnet, dass** ein Luftkraftstoffverhältnis in der Verbrennungskammer (5) während der Verbrennung vorübergehend auf stöchiometrisch oder auf fett eingestellt wird, wenn während des ersten Verbrennungsmodus NOx aus dem NOx-Absorber (19) freigesetzt wird.

5. Verbrennungsmotor (1) nach einem der Ansprüche 1 bis 4, **dadurch gekennzeichnet, dass** in einer Motorabgasleitung (18, 54, 58) ein Katalysator mit einer Oxidationsfunktion angeordnet ist.

6. Verbrennungsmotor (1) nach einem der Ansprüche 1 bis 5, **dadurch gekennzeichnet, dass** der Verbrennungsmotor (1) mit einer Abgasrückführvorrichtung (22, 23, 24) zum Zurückführen des aus der Verbrennungskammer (5) abgegebenen Abgases in eine Motoransaugleitung (8) ausgestattet ist und dass das inaktive Gas vorwiegend aus zurückgeführtem Abgas besteht.

7. Verbrennungsmotor (1) nach Anspruch 6, **dadurch gekennzeichnet, dass** eine Abgasrückführungsrate während des ersten Verbrennungsmodus etwa 55 % oder mehr beträgt.

8. Verbrennungsmotor (1) nach einem der Ansprüche 1 bis 7, **dadurch gekennzeichnet, dass** der erste Verbrennungsmodus an einer Niederlastseite eines Betriebsbereichs des Motors (1) und dass der zweite Verbrennungsmodus an einer Hochlastseite durchgeführt wird.

9. Verbrennungsmotor (1) nach einem der Ansprüche 1 bis 8, **dadurch gekennzeichnet, dass** in einer Motoransaugleitung (47) ein Drosselventil (16) angeordnet ist und dass ein nach dem Drosselventil in der Ansaugleitung (47) erzeugter Unterdruck einem Bremskraftverstärker (80) zugeleitet wird.

10. Verbrennungsmotor (1) nach Anspruch 9, **dadurch gekennzeichnet, dass** ein Öffnungsgrad des Drosselventils (16) verringert wird, wenn der dem Bremskraftverstärker (80) zugeleitete Unterdruck einen zuvor eingestellten Unterdruck unterschreitet.

11. Verbrennungsmotor (1) nach Anspruch 10, **dadurch gekennzeichnet, dass** der zuvor eingestellte Unterdruck erhöht wird, wenn die Fahrzeuggeschwindigkeit zunimmt.

12. Verbrennungsmotor (1) nach Anspruch 9, soweit sich dieser auf Anspruch 6 bezieht, **dadurch gekennzeichnet, dass**:
das inaktive Gas aus zurückgeführtem Abgas besteht, welches nach dem Drosselventil (16) in die Ansaugleitung (47) eingeleitet wird;
die Abgasrückführvorrichtung ein Abgasrückführ-Steuerventil (23) zum Steuern einer Zuführungsrate des zurückgeführten Abgases umfasst; wobei das zurückgeführte Abgas nach dem Drosselventil (16) in die Ansaugleitung (47) eingeleitet wird; und
zu allererst ein Öffnungsgrad des Drosselventils (16) verringert wird, wenn der dem Bremskraftverstärker (80) zugeführte Unterdruck den zuvor eingestellten Unterdruck unterschreitet, und dann ein Öffnungsgrad des Abgasrückführ-Steuerventils (23) verringert wird, wenn der dem Bremskraftverstärker (80) zugeführte Unterdruck den zuvor eingestellten Unterdruck immer noch unterschreitet.

13. Verbrennungsmotor (1) nach Anspruch 12, **dadurch gekennzeichnet, dass** ein Kraftstoffeinspritzzeitpunkt verzögert wird, wenn der Öffnungsgrad des Abgasrückführ-Steuerventils (23) verringert wurde.

14. Verbrennungsmotor (1) nach einem der Ansprüche 9 bis 13, **dadurch gekennzeichnet, dass** der Öffnungsgrad des Drosselventils (16) so lange verringert wird, bis das Luftkraftstoffverhältnis einen vorgegebenen Wert erreicht.

15. Verbrennungsmotor (1) nach einem der Ansprüche 1 bis 14, **dadurch gekennzeichnet, dass** der Katalysator (50, 55) mindestens aus einem Oxidationskatalysator, einem Dreiwegekatalysator oder einem NOx-Absorber besteht.

16. Verbrennungsmotor (1) nach einem der Ansprüche 1 bis 15, **dadurch gekennzeichnet, dass** das Kraftstoffeinspritzventil (6) in der Verbrennungskammer (5) angeordnet ist.

## Revendications

1. Moteur à combustion interne (1) dans lequel, en réponse à une augmentation de gaz inerte dans une chambre de combustion (5), une quantité de génération de suie augmente peu à peu et atteint son pic et dans lequel, en réponse à une autre augmentation de gaz inerte dans la chambre de combustion (5), une température du carburant et du gaz ambiant dans la chambre de combustion (5) pendant la combustion devient inférieure à une température à laquelle de la suie est produite de telle sorte que de la suie est à peine générée, **caractérisé en ce que** :
le moteur à combustion interne (1) est pourvu d'un moyen de commutation (30) pour commuter sélectivement entre un premier mode de combustion et un second mode de combustion, dans lequel
pendant le premier mode de combustion, la chambre de combustion (5) contient un gaz inerte en une quantité plus importante qu'une quantité où une quantité de génération de suie atteint son pic de telle sorte que de la suie est à peine générée et dans lequel
pendant le second mode de combustion, la chambre de combustion (5) contient un gaz inerte en une quantité plus faible qu'une quantité où une quantité de génération de suie atteint son pic ; et
du carburant supplémentaire est injecté depuis une soupape d'injection de carburant (6) dans la dernière moitié d'une course de détente ou pendant une course d'échappement de telle sorte qu'un rapport air - carburant du gaz d'échappement circulant dans un absorbeur de polluant (19), de préférence un absorbeur de NOx, est fixé à un rapport air - carburant stoechiométrique ou rendu riche de telle sorte que les polluants, de préférence le NOx, sont émis de l'absorbeur de polluant (19) pendant le second mode de combustion.

2. Moteur à combustion interne (1) selon la revendication 1, **caractérisé en ce que**, lorsque le NOx est émis de l'absorbeur de NOx pendant le second mode de combustion, lors de l'ouverture d'une soupape d'échappement (9), du carburant supplémentaire est injecté depuis la soupape d'injection de carburant (6) jusqu'à un espace entre une face arrière d'une partie fantôme de la soupape d'échappement et un orifice d'échappement (10).

3. Moteur à combustion interne (1) selon la revendication 2, **caractérisé en ce que** le carburant supplémentaire est injecté sur la face arrière de la partie fantôme de la soupape d'échappement.

4. Moteur à combustion interne (1) selon l'une quelconque des revendications 1 à 3, **caractérisé en ce que**, lorsque le NOx est émis de l'absorbeur de NOx (19) pendant le premier mode de combustion, un rapport air - carburant dans la chambre de combustion (5) pendant la combustion est temporairement établi au rapport air - carburant stoechiométrique ou rendu riche.

5. Moteur à combustion interne (1) selon l'une quelconque des revendications 1 à 4, **caractérisé en ce qu'**un catalyseur (50, 55) ayant une fonction d'oxydation est disposé dans un conduit d'échappement de moteur (18, 54, 58).

6. Moteur à combustion interne (1) selon l'une quelconque des revendications 1 à 5, **caractérisé en ce que** le moteur à combustion interne (1) est pourvu d'un dispositif de recirculation des gaz d'échappement (22, 23, 24) pour refaire circuler les gaz d'échappement émis de la chambre de combustion (5) dans un conduit d'admission de moteur (8) et **en ce que** le gaz inerte est composé principalement de gaz de recirculation d'échappement.

7. Moteur à combustion interne (1) selon la revendication 6, **caractérisé en ce qu'**un taux de recirculation de gaz d'échappement, de préférence pendant le premier mode de combustion, est d'environ 55 % ou plus.

8. Moteur à combustion interne (1) selon l'une quelconque des revendications 1 à 7, **caractérisé en ce que** le premier mode de combustion est exécuté sur un côté à faible charge d'une zone de fonctionnement du moteur (1) et **en ce que** le second mode de combustion est exécuté sur un côté à charge élevée.

9. Moteur à combustion interne (1) selon l'une quelconque des revendications 1 à 8, **caractérisé en ce qu'**un papillon des gaz (16) est disposé dans un conduit d'admission de moteur (47) et **en ce qu'**une dépression générée dans le conduit d'admission (47) en aval du papillon des gaz est mise en place dans un servofrein (80).

10. Moteur à combustion interne (1) selon la revendication 9, **caractérisé en ce que**, si la dépression mise en place dans le servofrein (80) est devenue plus basse qu'une dépression établie auparavant, un degré d'ouverture du papillon des gaz (16) est réduit.

11. Moteur à combustion interne (1) selon la revendication 10, **caractérisé en ce que** la dépression établie auparavant est augmentée à mesure qu'une vitesse de véhicule devient plus élevée.

12. Moteur à combustion interne (1) selon la revendication 9 dans la mesure où cette revendication renvoie à la revendication 6 , **caractérisé en ce que** :
le gaz inerte est composé de gaz de recirculation d'échappement qui est fourni au conduit d'admission (47) en aval du papillon des gaz (16) ;
le dispositif de recirculation des gaz d'échappement comprend une soupape de commande de recirculation des gaz d'échappement (23) pour commander un débit du gaz de recirculation d'échappement ; dans lequel le gaz de recirculation d'échappement est fourni au conduit d'admission (47) en aval du papillon des gaz (16) ; et
si la dépression mise en place dans le servofrein (80) est devenue plus basse que la dépression établie auparavant, tout d'abord, un degré d'ouverture du papillon des gaz (16) est réduit et, ensuite, si la dépression mise en place dans le servofrein (80) est toujours plus basse que la dépression établie auparavant, un degré d'ouverture de la soupape de commande de recirculation des gaz d'échappement (23) est réduit.

13. Moteur à combustion interne (1) selon la revendication 12, **caractérisé en ce que**, si le degré d'ouverture de la soupape de commande de recirculation des gaz d'échappement (23) a été réduit, un moment d'injection de carburant est retardé.

14. Moteur à combustion interne (1) selon l'une quelconque des revendications 9 à 13, **caractérisé en ce que** le degré d'ouverture du papillon des gaz (16) est réduit jusqu'à ce que le rapport air - carburant prend une valeur prédéterminée.

15. Moteur à combustion interne (1) selon l'une quelconque des revendications 1 à 14, **caractérisé en ce que** le catalyseur (50, 55) est composé d'au moins l'un du catalyseur d'oxydation, du catalyseur à trois voies et d'un absorbeur de NOx.

16. Moteur à combustion interne (1) selon l'une quelconque des revendications 1 à 15, **caractérisé en ce que** la soupape d'injection de carburant (6) est disposée dans la chambre de combustion (5).
